(19)

**Europäisches Patentamt**

**European Patent Office**

**Office européen des brevets**

(11) **EP 4 539 366 A1**

(12) **EUROPÄISCHE PATENTANMELDUNG**

(43) Veröffentlichungstag:
**16.04.2025 Patentblatt 2025/16**

(21) Anmeldenummer: 23203533.7

(22) Anmeldetag: **13.10.2023**

(51) Internationale Patentklassifikation (IPC):
**H04L 1/00** *(2006.01)* **H04L 1/1829** *(2023.01)*

(52) Gemeinsame Patentklassifikation (CPC):
**H04L 1/0019; H04L 1/0003; H04L 1/1614; H04L 1/1854;** H04L 2001/0093

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Fraunhofer-Gesellschaft zur Förderung der angewandten Forschung e.V. 80686 München (DE)**

(72) Erfinder:
• **MILOSIU, Heinrich 91058 Erlangen (DE)**
• **EPPEL, Markus 90429 Nürnberg (DE)**
• **OEHLER, Frank 91058 Erlangen (DE)**
• **GEYER, Michael 91058 Erlangen (DE)**

(74) Vertreter: **König, Andreas Rudolf et al Schoppe, Zimmermann, Stöckeler Zinkler, Schenk & Partner mbB Patentanwälte Radlkoferstraße 2 81373 München (DE)**

(54) **SENDEN VON TESTSEQUENZEN ZUR AUSWAHL VON SENDEEIGENSCHAFTEN BEI EINEM FUNK-TRANSCEIVER, FUNKNETZWERK UND VERFAHREN ZUM BETREIBEN VON FUNK-TRANSCEIVERN**

(57)     Ein Funk-Transceiver zum Aussenden einer Funknachricht ist ausgebildet, um eine Mehrzahl von Testfunksequenzen auszusenden, wobei der Funk-Transceiver ausgebildet ist, um unterschiedliche Testfunksequenzen mit voneinander verschiedenen Sendeeigenschaften auszusenden und jede Sendeeigenschaft eine aus einer Mehrzahl von Sendeeigenschaften ist. Der Funk-Transceiver ist ausgebildet, um eine Rückmeldung zu erhalten, die eine mit einem Empfang der Mehrzahl von Testfunksequenzen durch einen Empfängerknoten assoziierte Information aufweist. Basierend auf der Rückmeldung wird eine ausgewählte Sendeeigenschaft aus der Mehrzahl von Sendeeigenschaften durch den Funk-Transceiver ausgewählt und die Funknachricht an den Empfängerknoten mit der ausgewählten Sendeeigenschaft gesendet.

1200

| Aussenden einer Mehrzahl von Testfunksequenzen mit voneinander verschiedenen Sendeeigenschaften, so dass jede Sendeeigenschaft eine aus einer Mehrzahl von Sendeeigenschaften ist |
— 1210

↓

| Erhalten einer Rückmeldung, die eine mit einem Empfang der Mehrzahl von Testfunksequenzen durch einen Empfängerknoten assoziierte Information aufweist |
— 1220

↓

| Auswählen einer ausgewählten Sendeeigenschaft aus der Mehrzahl von Sendeeigenschaften anhand eines Auswahlkriteriums und basierend auf der Rückmeldung |
— 1230

↓

| Verwenden der ausgewählten Sendeeigenschaft für eine Übertragung der Funknachricht an den Knoten |
— 1240

Fig. 12

EP 4 539 366 A1

**Beschreibung**

Die vorliegende Erfindung bezieht sich auf einen Funk-Transceiver zum Aussenden einer Funknachricht unter Berücksichtigung einer Rückmeldung, die auf ein Aussenden von Testfunksequenzen erhalten wurde. Die vorliegende Erfindung bezieht sich ferner auf einen Funk-Transceiver, der ausgebildet ist, um auf den Empfang mehrerer Testfunksequenzen eine Rückmeldung auszusenden, die mit einem Empfang der Mehrzahl von Testfunksequenzen assoziierte Information aufweist. Weitere Aspekte der vorliegenden Erfindung beziehen sich auf ein Funknetzwerk und auf Verfahren zum Betreiben von Funk-Transceivern. Die vorliegende Erfindung bezieht sich ferner auf eine Methode zur Maximierung des Datendurchsatzes durch Anpassung des Code-Alphabets, der Datenrate und der Sendeleistung für die Funkübertragung und zur Detektion unbelegter Funkkanäle.

Funk-Transceiver können spontan oder nach gewissen Mustern Funksignale aussenden bzw. Funksignale empfangen. Die Verwendung eines solchen Funkkanals kann störungsbehaftet sein. Störungen können beispielsweise unkoordinierte oder spontane Funksignale Dritter sein, die eine Nutzung des Funkkanals temporär erschweren bzw. teilweise unmöglich machen. Funkübertragungen weisen dann sehr hohe Fehlerraten auf, die eine Fehlerkorrektur womöglich nicht mehr kompensieren können. Funkübertragungsversuche zur Informationsübermittlung scheitern dann.

Ein solcher Verlust von Nachrichten erfordert in bekannten Systemen eine Neuübermittlung und ggf. Neuschätzung des Kanals, was sowohl zeitaufwendig als auch energiekonsumierend ist.

Wünschenswert wären demnach Konzepte zum Erhalten hoher Datenraten auf energieeffizientem Weg.

Eine Aufgabe der vorliegenden Erfindung besteht deshalb darin, Funk-Transceiver zu schaffen, die eine hohe Datenrate bei gleichzeitig geringem Energiebedarf für die Funkkanalnutzung ermöglichen.

Diese Aufgabe wird durch den Gegenstand der unabhängigen Patentansprüche gelöst.

Der Kerngedanke der vorliegenden Erfindung besteht darin, erkannt zu haben, dass ein Vorab-Aussenden von Testfunksequenzen mit unterschiedlichen Sendeeigenschaften und der Erhalt einer Rückmeldung bezüglich des Empfangs dieser Testfunksequenzen die Möglichkeit am Sender bereitstellt, die beste Sendeeigenschaft für eine spätere Übermittlung eines Funksignals auszuwählen. Dies ermöglicht es, beispielsweise die höchste Datenrate bei gleichzeitig geringstem Energieverbrauch in Anbetracht der empfangenen Rückmeldung auszuwählen.

Gemäß einem Ausführungsbeispiel wird ein Funk-Transceiver zum Aussenden einer Funknachricht bereitgestellt. Der Funk-Transceiver ist ausgebildet, um eine Mehrzahl von Testfunksequenzen auszusenden, wobei der Funk-Transceiver ausgebildet ist, um unterschiedliche Testfunksequenzen mit voneinander verschiedenen Sendeeigenschaften auszusenden und jede Sendeeigenschaft eine aus einer Mehrzahl von Sendeeigenschaften ist. Der Funk-Transceiver ist ausgebildet, um eine Rückmeldung zu erhalten, die eine mit einem Empfang der Mehrzahl von Testfunksequenzen durch einen Empfängerknoten assoziierte Information aufweist. Der Funk-Transceiver ist ausgebildet, um anhand eines Auswahlkriteriums basierend auf der Rückmeldung eine ausgewählte Sendeeigenschaft aus der Mehrzahl von Sendeeigenschaften auszuwählen und um für eine Übertragung der Funknachricht an den Empfängerknoten die ausgewählte Sendeeigenschaft zu verwenden. Dies ermöglicht unterschiedliche Optimierungsmöglichkeiten am Sender unter Berücksichtigung der bestehenden Kanaleigenschaften.

Gemäß einem Ausführungsbeispiel ist der Funk-Transceiver ausgebildet, um eine Auswahlinformation an den Knoten zu senden, die die Mehrzahl von Testfunksequenzen als eine Auswahl aus einer Anzahl von vordefinierten Testfunksequenzen angibt. Dies ermöglicht für den Funk-Transceiver eine Zuordnung unterschiedlicher Informationskomponenten in der Rückmeldung und für den Empfängerknoten eine Zuordnung, welche Sendeeigenschaften er zu erwarten hat.

Gemäß einem Ausführungsbeispiel ist der Funk-Transceiver ausgebildet, um die Auswahlinformation zusammen mit der Mehrzahl von Testfunksequenzen auszusenden. Dies ermöglicht eine ressourcenschonende Nutzung des Kanals und eine fehlerarme Zuordnung von Information am Empfängerknoten.

Gemäß einem Ausführungsbeispiel ist der Funk-Transceiver ausgebildet, um die Auswahlinformation in Form einer Kennung auszusenden, die mit der Testfunksequenz und der Sendeeigenschaft eindeutig assoziiert ist. Dies ermöglicht einen geringen Umfang an zu übermittelnden Informationen bei gleichzeitig präziser Zuordnung am Empfängerknoten.

Gemäß einem Ausführungsbeispiel ist die Sendeeigenschaft zumindest eines aus einer zum Senden der Testfunksequenz verwendeten Datenrate, einer zum Senden der Testfunksequenz verwendeten Sendeleistung, eines zum Codieren der Testfunksequenz verwendeten Codes und einer Modulationsart zum Modulieren der Testfunksequenz. Dies ermöglicht einzeln, aber insbesondere in Kombination miteinander, das Aufspannen eines Sendeeigenschaftenraums, in welchem unterschiedliche Testfunksequenzen womöglich in unterschiedlicher Güte oder Qualität am Empfängerknoten empfangen werden können, so dass vermittels der Rückmeldung erkannt werden kann, welche der Sendeeigenschaften sich besonders gut für die Übermittlung des Funksignals eignet.

Gemäß einem Ausführungsbeispiel ist der Funk-Transceiver ausgebildet, um die Mehrzahl von Testfunksequenzen mit unterschiedlichen Datenraten, unterschiedlichen Sendeleistungen und unterschiedlichen Codes und ggf. unterschiedlichen Modulationsarten auszusenden. Dies ermöglicht den Erhalt eines großen Suchraums für die Sendeeigenschaft des Funksignals.

Gemäß einem Ausführungsbeispiel ist der Funk-Transceiver ausgebildet, um als Auswahlkriterium eine minimale Funkkanalokkupation oder eine minimale Empfängerleistung am Knoten anzuwenden. Es kann somit senderseitig berücksichtigt werden, wie der Energieverbrauch am Empfänger gering gehalten werden kann oder eine Datenrate hoch ist, was zu einer gleichzeitigen geringen Okkupationszeit des Kanals führen kann.

Gemäß einem Ausführungsbeispiel ist der Funk-Transceiver ausgebildet, um basierend auf der Rückmeldung abzuleiten, welche der Testfunksequenzen von dem Empfängerknoten erfolgreich empfangen wurden. Der Transceiver kann aus den Sendeeigenschaften der erfolgreich empfangenen Testfunksequenzen diejenige Sendeeigenschaft für die Funknachricht auswählen, die den geringsten Abstand zu einem Optimum des Auswahlkriteriums aufweist, etwa im Sinne eines Optimums für die Datenrate und/oder des Energieverbrauchs am Sender und/oder Empfänger. Alternativ oder zusätzlich kann der Funk-Transceiver Sendeeigenschaften der nicht erfolgreich empfangenen Testfunksequenzen für die Funknachricht vermeiden. Dies erlaubt eine Begrenzung des Einstellungsraums.

Gemäß einem Ausführungsbeispiel ist der Funk-Transceiver ausgebildet, um basierend auf der Rückmeldung abzuleiten, welche der Testfunksequenzen von dem Empfängerknoten erfolgreich empfangen wurden und aus den Sendeeigenschaften der erfolgreich empfangenen Testfunksequenzen diejenige Sendeeigenschaft für die Funknachricht auszuwählen, die zumindest näherungsweise eine höchste Datenrate, eine geringste Coderate und/oder eine geringste Sendeleistung aufweist. Dies ermöglicht die Berücksichtigung der eigenen Batterieleistung und der eigenen Kapazitäten ebenso wie der Kapazitäten des Empfängers und anderer Kanalteilnehmer, die denselben Funkkanal nutzen wollen.

Gemäß einem Ausführungsbeispiel ist der Funk-Transceiver ausgebildet, um basierend auf der Rückmeldung abzuleiten, welche der Testfunksequenzen von dem Empfängerknoten erfolgreich empfangen wurden und ist ausgebildet, um aus den Sendeeigenschaften der erfolgreich empfangenen Testfunksequenzen diejenige Sendeeigenschaft für die Funknachricht auszuwählen, die zumindest näherungsweise eine geringste Datenrate aufweist. Diese vermeintlich zunächst widersprüchliche Auswahl ermöglicht einen energiesparenden Umgang mit Transientenstörern an Empfängern, da das einzelne Bit bzw. eine einzelne Signalflanke eine längere Zeit erkennbar ist, so dass Kurzzeitstörer womöglich besser korrigiert oder berücksichtigt werden können, was im Nachgang eine Neuübermittlung der Funknachricht vermeiden kann. Aufgrund dieser Strategie kann in den Störpausen schnell gesendet werden, etwa bei Auswahl einer hohen Senderate (siehe Teilstrategie S1) oder es kann, wie soeben beschreiben, so langsam gesendet, dass die kurzen Störer nicht wirksam werden, indem eine geringe oder geringste Datenrate gewählt wird, um kurze Pulsstörer (Co-Channel Interferer, CCI) beim Empfänger zu adressieren.

Gemäß einem Ausführungsbeispiel ist der Funk-Transceiver ausgebildet, um sogenannte Gold-Codes mit einer Länge von 31 Bit als Testfunksequenzen zu verwenden. Diese Gold-Codes weisen eine gute Unterscheidbarkeit voneinander auf, weisen eine geringe Fehlerkorrekturmöglichkeit auf und sind somit am Empfänger gut voneinander unterscheidbar.

Gemäß einem Ausführungsbeispiel ist der Funk-Transceiver ausgebildet, um die Testfunksequenzen basierend auf einem Trägerereignis, eine Benutzereingabe basierend auf einer vorbestimmten Übermittlung der Funknachricht oder in regelmäßigen Intervallen auszusenden. Dies ermöglicht in unterschiedlicher Weise, dass zum Beginn des Aussendens des Funksignals die Information bezüglich der zu wählenden Sendeeigenschaft bereits vorliegt.

Gemäß einem Ausführungsbeispiel ist der Funk-Transceiver ausgebildet, um eine zumindest den Empfängerknoten identifizierende Information zusammen mit der Mehrzahl von Testfunksequenzen auszusenden. Dies ermöglicht es, vermittels der Testfunksequenzen einen von mehreren möglichen Empfängerknoten anzusprechen und zur Übermittlung der Rückmeldung aufzufordern. Dies ermöglicht es damit auch, für unterschiedliche Empfängerknoten oder Gruppen von Empfängerknoten unterschiedliche Testfunksequenzen aus einer vordefinierten Anzahl von Testfunksequenzen auszuwählen, also unterschiedliche Sets, was eine Anpassung an bereits bekannte Vorabinformation bezüglich der Kanaleigenschaften ebenso ermöglicht wie die Unterscheidung der Sequenzen für die unterschiedlichen Gruppen.

Gemäß einem Ausführungsbeispiel ist der Funk-Transceiver ausgebildet, um basierend auf der Mehrzahl von Testfunksequenzen Rückmeldungen von unterschiedlichen Empfängerknoten zu erhalten, und um die Sendeeigenschaft für eine Übermittlung einer Funknachricht an den jeweiligen Empfängerknoten aus der jeweiligen Rückmeldung auszuwählen. Dies ermöglicht eine individuelle Auswahl der Sendeeigenschaft für individuelle Funknachrichten an unterschiedliche Empfängerknoten.

Gemäß einem Ausführungsbeispiel ist der Funk-Transceiver ausgebildet, um die Mehrzahl von Testfunksequenzen als eine erste Mehrzahl von Testfunksequenzen an den Empfängerknoten als einen ersten Empfängerknoten zu senden und um eine zweite Mehrzahl von Testfunksequenzen an einen zweiten Empfängerknoten zu senden. Die erste Mehrzahl und die zweite Mehrzahl von Testfunksequenzen weisen eine gleiche Bitlänge, also eine gleiche Anzahl von Bit, auf und stellen unterschiedlich ausgewählte Teilmengen einer vordefinierten Gesamtmenge an Testfunksequenzen dar. Dies ermöglicht die optimale Kanalnutzung für jeden der Empfängerknoten.

Gemäß einem Ausführungsbeispiel ist der Funk-Transceiver ausgebildet, um aus der Rückmeldung abzuleiten, dass der Empfängerknoten für den Funk-Transceiver erreichbar ist, um eine Konnektivitätsinformation zu erhalten, und um die Konnektivitätsinformation einer anderen Vorrichtung bereitzustellen. Dies ermöglicht den Aufbau von netzwerkweiten Konnektivitätsinformationen, in dem Informationen darüber verbreitet werden, welcher Knoten über welchen anderen Knoten erreichbar ist.

Gemäß einem Ausführungsbeispiel ist der Funk-Transceiver ausgebildet, um ein Ausbleiben der Rückmeldung als eine zu dem Empfängerknoten gestörte Funksituation zu interpretieren. Dies ermöglicht es beispielsweise, eine andere Auswahl von Testfunksequenzen für einen erneuten Versuch zu verwenden und/oder um unter Berücksichtigung von Konnektivitätsinformation einen anderen Empfängerknoten anzusprechen.

Gemäß einem Ausführungsbeispiel ist der Funk-Transceiver ausgebildet, um eine Mehrzahl von mit voneinander verschiedenen Sendeeigenschaften ausgesendeten Testfunksequenzen von einem Sendeknoten zu empfangen und um eine Rückmeldung auszusenden, die eine mit einem Empfang der Mehrzahl von empfangenen Testfunksequenzen durch den Funk-Transceiver assoziierte Information aufweist. Eine derartige Information kann beispielsweise eine Bestätigungsinformation, etwa ein Bestätigungsbit bzw. positive Bestätigung, ACK, umfassen, eine negative Bestätigung im Falle eines fehlgeschlagenen Empfangs, NACK, aber auch eine gruppenweise Bestätigung/negative Rückmeldung für mehrere Testfunksequenzen. So kann beispielsweise angegeben werden, dass eine Gruppe von Testfunksequenzen empfangen oder nicht empfangen wurde, was zwar zu einer Schmälerung der Entscheidungsfreiheit am Sender führt, aber die zu übertragende Informationsmenge in der Rückmeldung reduziert.

Gemäß einem Ausführungsbeispiel, das unabhängig von vorangehend beschriebenen Funk-Transceivern ausgeführt werden kann, ist ein Funk-Transceiver ausgebildet, um eine Mehrzahl von miteinander verschiedenen Sendeeigenschaften ausgesendeten Testfunksequenzen von einem Sendeknoten zu empfangen, und um eine Rückmeldung auszusenden, die eine mit einem Empfang der Mehrzahl von Testfunksequenzen durch den Funk-Transceiver assoziierte Information aufweist. Ein derartiger Funk-Transceiver kann beispielsweise mit einem vorangehend beschriebenen Funk-Transceiver zusammenarbeiten. Wie es vorangehend beschrieben ist, können Funk-Transceiver auch so ausgebildet sein, dass sie sowohl zum Aussenden der Testfunksequenzen als auch zum Empfangen von Testfunksequenzen eines anderen Funk-Transceivers ausgebildet sind, womit hochflexible Netzwerke aufgebaut werden können.

Gemäß einem Ausführungsbeispiel ist ein Funk-Transceiver ausgebildet, um eine Auswahlinformation für die Mehrzahl von Testfunksequenzen zu erhalten, die für eine Menge von vordefinierten Testfunksequenzen mit einer jeweils zugeordneten Sendeeigenschaft eine Auswahl angibt, die die Mehrzahl von Testfunksequenzen bildet. Dies ermöglicht eine Unterstützung des Funk-Transceivers beim Empfangen oder Auswerten der empfangenen Testfunksequenzen.

Gemäß einem Ausführungsbeispiel ist der Funk-Transceiver ausgebildet, um in der Rückmeldung anzugeben, welche der Mehrzahl von Testfunksequenzen, denen jeweils eine Sendeeigenschaft zugeordnet ist, erfolgreich empfangen wurden, und/oder um in der Rückmeldung anzugeben, welche der Mehrzahl von Testfunksequenzen, denen jeweils eine Sendeeigenschaft zugeordnet ist, nicht erfolgreich empfangen wurden. Gemäß einer besonders bevorzugten Ausgestaltung kann eine solche Information binär ausgegeben werden, so dass beispielsweise ein Wert von 0 einen erfolgreichen oder nicht erfolgreichen Empfang einer Testfunksequenz oder eine Gruppe hiervon angibt und der andere Binärwert die komplementäre Information anzeigt.

Gemäß einem Ausführungsbeispiel ist der Funk-Transceiver ausgebildet, um basierend auf der Auswahlinformation eine binäre Information mit der Rückmeldung zurückzugeben, die einen erfolgreichen oder nicht erfolgreichen Empfang zumindest einer Testfunksequenz angibt. Dies ermöglicht eine besonders kurze Rückmeldung im Funkkanal.

Gemäß einem Ausführungsbeispiel ist der Funk-Transceiver ausgebildet, um in der Rückmeldung einen erfolgreichen oder nicht erfolgreichen Empfang für eine Gruppe von zumindest 2 der Mehrzahl von Testfunknachrichten kombinatorisch anzugeben.

Gemäß einem Ausführungsbeispiel ist der Funk-Transceiver ausgebildet, um die Rückmeldung nicht zu senden, wenn ein Anteil nicht erfolgreich empfangener Testfunksequenzen aus der Mehrzahl von Testfunksequenzen einen vordefinierten Schwellenwert übersteigt. So kann beispielsweise anhand des Schwellenwerts entschieden werden, ob der Kanal so stark gestört ist, dass ein Aussenden der Rückmeldung wenig erfolgsversprechend ist und insofern die Aussendung der Rückmeldung besser unterbleibt. Das Ausbleiben der Rückmeldung kann am Ort des Senders entsprechend interpretiert werden.

Gemäß einem Ausführungsbeispiel ist der Funk-Transceiver ausgebildet, um die Rückmeldung für zumindest eine Testfunksequenz basierend auf einer XOR-Verknüpfung eines Binärwerts für einen erwarteten Empfang der zumindest einen Testfunksequenz der Mehrzahl von Testfunksequenzen, etwa abgeleitet aus einer Auswahlinformation, und eines Binärwerts für einen erfolgreichen Empfang der zumindest einen Testfunksequenz zu erhalten.

Dies ermöglicht mit geringem Rechenaufwand eine schnelle Ermittlung der zu übermittelnden Information.

Gemäß einem Ausführungsbeispiel ist der Funk-Transceiver ausgebildet, um eine Mehrzahl von Testfunksequenzen auszusenden, wobei der Funk-Transceiver ausgebildet ist, um unterschiedliche Testfunksequenzen mit voneinander verschiedenen Sendeeigenschaften auszusenden und jede Sendeeigenschaft eine aus einer Mehrzahl von Sendeeigenschaften ist. Der Funk-Transceiver ist ausgebildet, um eine Rückmeldung zu erhalten, die eine mit einem Empfang der Mehrzahl von gesendeten Testfunksequenzen durch einen Empfängerknoten assoziierte Information aufweist. Der Funk-Transceiver ist ausgebildet, um anhand eines Auswahlkriteriums basierend auf der Rückmeldung eine ausgewählte Sendeeigenschaft aus der Mehrzahl von Sendeeigenschaften auszuwählen und um für eine Übertragung der Funknachricht an den Knoten die ausgewählte Sendeeigenschaft zu verwenden. Das bedeutet, der rückmeldende Funk-Transceiver kann auch für den Sendefall, wie er vorangehend beschrieben wurde, konfiguriert sein, um vorteilhaft in ein Funknetzwerk integriert zu werden.

Gemäß einem Ausführungsbeispiel umfasst ein Funknetzwerk zumindest einen, die Testfunksequenzen sendenden und einen, die Rückmeldung aussendenden Funk-Transceiver.

Gemäß einem Ausführungsbeispiel ist der erste Funk-Transceiver, der die Testfunksequenzen aussendende Funk-Transceiver, ausgebildet, um an unterschiedliche bzw. unterschiedlich konfigurierte Mehrzahlen von Testfunksequenzen auszusenden, die unter Verwendung gleicher Bitsequenzen in unterschiedliche Sendeeigenschaften erhalten werden, also unterschiedlich ausgesendete Bitsequenzen. Dies ermöglicht eine individuelle Anpassung der Sendeeigenschaften an die unterschiedlichen empfangenen zweiten Funk-Transceiver.

Gemäß einem Ausführungsbeispiel ist die Mehrzahl von zweiten Knoten ausgebildet, um die Mehrzahl von Rückmeldungen unter Anwendung einer Kollisionsvermeidungsstrategie auszusenden, um eine Kollision am ersten Knoten zu vermeiden. Dies ermöglicht eine präzise Zuordnung der Rückmeldungen zu den einzelnen Knoten.

Gemäß einem Ausführungsbeispiel ist jedem der Mehrzahl von zweiten Funk-Transceivern eine Kennung zugewiesen, und die zweiten Funk-Transceiver sind ausgebildet, um die Rückmeldung mit einer Zeitverzögerung auszusenden, die mit der Kennung assoziiert ist, um die Kollisionsvermeidungsstrategie umzusetzen, so dass unterschiedliche Kennungen zu unterschiedlichen Zeitverzögerungen führen. Dies ermöglicht eine Vermeidung der Aussendung der Kennung und somit eine Vermeidung hierfür benötigter Kanalokkupation.

Gemäß einem Ausführungsbeispiel ist das Funknetzwerk ausgebildet, um basierend auf der Mehrzahl von Rückmeldungen Konnektivitätsinformation abzuleiten, welcher Funk-Transceiver über welchen Pfad im Funknetzwerk erreichbar ist.

Gemäß einem Ausführungsbeispiel umfasst ein Verfahren zum Betreiben eines Funk-Transceivers ein Aussenden einer Mehrzahl von Testfunksequenzen mit voneinander verschiedenen Sendeeigenschaften, so dass jede Sendeeigenschaft eine aus einer Mehrzahl von Sendeeigenschaften ist. Das Verfahren umfasst ein Erhalten einer Rückmeldung, die eine mit einem Empfang der Mehrzahl von Testfunksequenzen durch einen Empfängerknoten assoziierte Information aufweist. Des Weiteren umfasst das Verfahren ein Auswählen einer ausgewählten Sendeeigenschaft aus der Mehrzahl von Sendeeigenschaften anhand eines Auswahlkriteriums und basierend auf der Rückmeldung. Das Verfahren umfasst ein Verwenden der ausgewählten Sendeeigenschaft für eine Übertragung der Funknachrichten an den Knoten.

Gemäß einem Ausführungsbeispiel umfasst ein Verfahren zum Betreiben eines Funk-Transceivers ein Empfangen einer Mehrzahl von miteinander verschiedenen Sendeeigenschaften ausgesendeten Testfunksequenzen von einem Sendeknoten und ein Aussenden einer Rückmeldung, die eine mit einem Empfang der Mehrzahl von Testfunksequenzen durch den Funk-Transceiver assoziierte Information aufweist.

Weitere Aspekte beziehen sich auf ein Computerprogramm oder Computerprogrammprodukt mit Programmcode zur Durchführung derartiger Verfahren.

Weitere bevorzugte Ausführungsbeispiele sind der Gegenstand abhängiger Patentansprüche.

Besonders bevorzugte Ausführungsformen der vorliegenden Erfindung werden nachfolgend Bezug nehmend auf die beiliegenden Zeichnungen erläutert. Es zeigen:

Fig. 1     ein schematisches Blockschaltbild eines Funknetzwerks gemäß einem Ausführungsbeispiel;

Fig. 2     eine schematische Darstellung eines drahtlosen Übertragungskanals zwischen Funktransceivern gemäß einem Ausführungsbeispiel;

Fig. 3     ein exemplarisches Diagramm im Zusammenhang mit Ausführungsbeispielen, bei dem eine tolerierbare Fehleranzahl an der Ordinate gegenüber einem Empfang einer Sequenz aus einem Codevorrat an der Abszisse aufgetragen ist;

Fig. 4     ein schematisches Blockschaltbild eines Funknetzwerks gemäß einem Ausführungsbeispiel, das mehrere empfangende Funktransceiver aufweist;

Fig. 5     eine schematische Darstellung eines Kombinationsraumes von Testfunksequenzen gemäß einem Ausführungsbeispiel zur Veranschaulichung möglicher Kombinationen;

Fig. 6     ein schematisches Blockdiagramm eines möglichen Funktelegramms gemäß einem Ausführungsbeispiel;

Fig. 7   eine schematische Darstellung einer Unterauswahlvon Testfunksequenzen gemäß einem Ausführungsbeispiel in einer tabellarischen Darstellung;

Fig. 8   eine schematische Darstellung einer Auswahlinformation gemäß einem Ausführungsbeispiel;

Fig. 9   eine schematische Darstellung zumindest eines Teils einer auf eine Testfunksequenz übermittelten Rückmeldung gemäß einem Ausführungsbeispiel;

Fig. 10   ein schematisches Blockschaltbild eines Funknetzwerks gemäß einem Ausführungsbeispiel, bei dem ein Funktransceiver keine Rückmeldung sendet;

Fig. 11   ein schematisches Zeitdiagramm einer bevorzugten Ausgestaltung des Funknetzwerks aus Fig. 10 zur Implementierung einer Kollisionsvermeidungsstrategie;

Fig. 12   ein schematisches Ablaufdiagramm eines Verfahrens gemäß einem Ausführungsbeispiel; und

Fig. 13   ein schematisches Flussdiagramm eines Verfahrens gemäß einem weiteren Ausführungsbeispiel

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

Nachfolgend beschriebene Ausführungsbeispiele werden im Zusammenhang mit einer Vielzahl von Details beschrieben. Ausführungsbeispiele können jedoch auch ohne diese detaillierten Merkmale implementiert werden. Des Weiteren werden Ausführungsbeispiele der Verständlichkeit wegen unter Verwendung von Blockschaltbildern als Ersatz einer Detaildarstellung beschrieben. Ferner können Details und/oder Merkmale einzelner Ausführungsbeispiele ohne Weiteres mit einander kombiniert werden, solange es nicht explizit gegenteilig beschrieben ist.

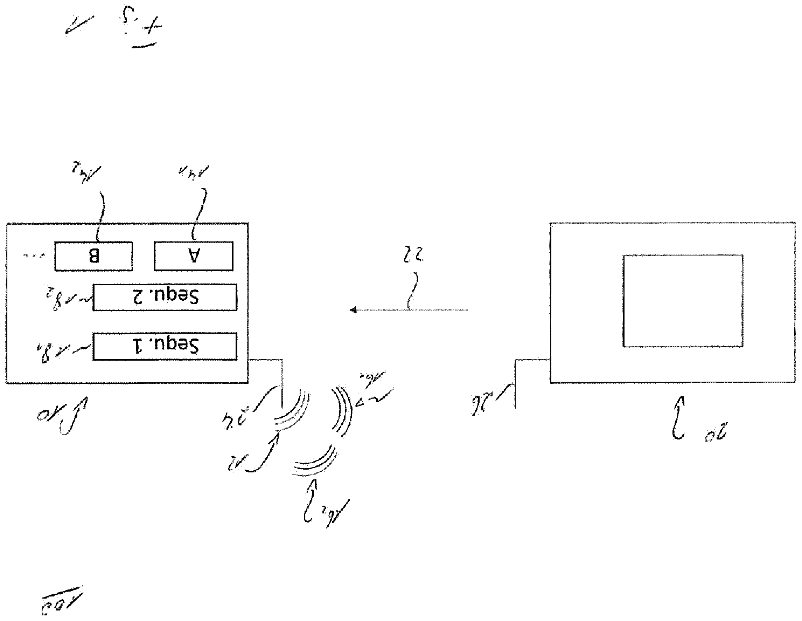

Fig. 1 zeigt ein schematisches Blockschaltbild eines Funknetzwerks 100 gemäß einem Ausführungsbeispiel. Das Funknetzwerk 100 umfasst einen ersten Funk-Transceiver 10 und einen zweiten Funk-Transceiver 20. Im Zusammenhang mit hierin beschriebenen Ausführungsbeispielen kann der Funk-Transceiver 10 als Testfunksequenzen aussendender oder eine Kanalschätzung implementierender Funk-Transceiver verstanden werden und der Funk-Transceiver 20 als rückmeldender bzw. die Testfunksequenzen empfangender Funk-Transceiver verstanden werden.

Der Funk-Transceiver 10 ist ausgebildet, um eine Funknachricht 12 auszusenden, etwa an den Funk-Transceiver 20 oder eine Gruppe von Funk-Transceiver, zu denen der Funk-Transceiver 20 gehört. Ob dabei ein Empfang im Sinne einer bidirektionalen Kommunikation erfolgen soll, kann von untergeordneter Wichtigkeit sein, der Funk-Transceiver 10 kann jedoch beabsichtigen, einen Empfang der Funknachricht 12 durch den Funk-Transceiver 20 sicherzustellen. Dies ist auch durch sogenannte Groupcast oder Broadcast oder andere unidirektionale Mitteilungen möglich.

Um die Funknachricht 12 auszusenden, ist der Funk-Transceiver 10 ausgebildet, um eine von einer Mehrzahl von Sendeeigenschaften $14_1$ und $14_2$ auszuwählen. Die Anzahl von Sendeeigenschaften, die für das Formen oder Bilden oder Aussenden des Funksignals 12 zur Verfügung stehen, sind in der Regel deutlich größer als 2, etwa zumindest 5, zumindest 10, zumindest 50 oder höher. So kann beispielsweise eine Sendeleistung in einer Mehrzahl von Schritten angepasst werden, eine aus einer Mehrzahl von Datenraten ausgewählt werden, einer aus einer Mehrzahl von Codes zum Codieren ausgewählt werden, eine Modulationsart für das Funksignal als eine aus einer Mehrzahl von Modulationsarten ausgewählt werden, wobei der Funk-Transceiver womöglich ausgebildet sein kann, um eine aus einer Anzahl von analogen Modulationsarten, etwa AM, FM, PM oder dergleichen auszuwählen und/oder um eine aus einer digitalen Modulationsart, etwa OOK (On-Off-Keying), QAM (Quadraturamplitudenmodulation) oder dergleichen auszuwählen. Andere Modulationsarten, etwa eine hierarchische Modulation oder eine Frequenzspreizung oder dergleichen, kann ebenfalls in einer oder einer Mehrzahl von unterschiedlichen Ausgestaltungen für eine Auswahl vorliegen.

Bereits eine Variation in einer der genannten Dimensionen Datenrate, Sendeleistung, Code und Modulationsart kann zu einer Vielzahl von verwendbaren Sendeeigenschaften führen. Dies wird noch einmal deutlich vergrößert, wenn der Funk-Transceiver ausgebildet ist, 2, 3, 4 oder noch weitere Parameter einzustellen.

Zunächst ist der Funk-Transceiver 10 ausgebildet, um eine Mehrzahl von Testfunksequenzen $16_1$ und $16_2$ auszusenden, wobei der Funk-Transceiver ausgebildet ist, um unterschiedliche Testfunksequenzen mit voneinander verschiedenen Sendeeigenschaften $14_1$ und $14_2$ auszusenden. So wird beispielsweise die Testfunksequenz $16_1$ unter Verwendung der Sendeeigenschaft $14$, und die Testfunksequenz $16_2$ unter Verwendung der Sendeeigenschaft $14_2$ ausgesendet. Die verwendeten Sendeeigenschaften $14_1$ und $14_2$ können eine Auswahl aus der Menge verfügbarer oder einstellbarer Sendeeigenschaften sein. Auch können die Testfunksequenzen auf der gleichen oder voneinander ver-

schiedenen Bitsequenzen $18_1$ und $18_2$ basieren. Eine mögliche, aber nicht einschränkende Ausgestaltung sieht vor, dass die Testfunksequenz $16_1$ unter Verwendung der Bitsequenz $18_1$ und der Sendeeigenschaft 14, ausgesendet wird und die Testfunksequenz $16_2$ unter Verwendung der Bitsequenz $18_1$ oder einer anderen Bitsequenz, etwa der Bitsequenz $18_2$ und unter Verwendung der Sendeeigenschaft $14_2$.

Der Funk-Transceiver ist ausgebildet, um eine Rückmeldung 22 zu erhalten, die eine mit einem Empfang der Mehrzahl von Testfunksequenzen 16 durch den als Empfängerknoten operierenden Funk-Transceiver 20 assoziierte Information aufweist. Der Informationsgehalt der Rückmeldung 22 lässt somit Rückschlüsse auf, welche der Testfunk-sequenzen $16_1$ und $16_2$ oder Gruppen hiervon erfolgreich und/oder nicht erfolgreich empfangen wurden. Als erfolgreich oder nicht erfolgreich kann dabei einerseits verstanden werden, dass ein korrekter Empfang, etwa unter Einbeziehung einer Fehlerkorrektur, möglich war und/oder ob der Empfang noch gewisse Reserven bezüglich der Kanalqualität vorhält. So kann beispielsweise bei einem Code in der Bitsequenz $18_1$ oder $18_2$, der eine Korrektur von 4 Fehlern ermöglicht, eine Toleranz von 1, 2 oder 3 Fehlern eingestellt werden und ein Überschreiten eines derartigen Schwellwerts/Schwellenwerts bereits als nicht erfolgreicher Empfang interpretiert werden.

Die Rückmeldung 22 gibt insofern an, welche der Funksequenzen $16_1$ und $16_2$ im Hinblick auf eine vorab eingestellte Eigenschaft erfolgreich von dem Funk-Transceiver 20 empfangen wurden. Der Funk-Transceiver 10 ist nun ausgebildet, um anhand eines Auswahlkriteriums und basierend auf der Rückmeldung 22 eine ausgewählte Sendeeigenschaft aus der Mehrzahl von Sendeeigenschaften $14_1$ und $14_2$ auszuwählen. So kann der Funk-Transceiver 10 beispielsweise ausgebildet sein, um anhand der Rückmeldung 22 festzustellen, dass die Testsequenz $16_1$ oder die Testsequenz $16_2$ besser als die andere empfangen wurde oder überhaupt empfangen wurde oder dass beide der Testsequenzen $16_1$ und $16_2$ empfangen oder nicht empfangen wurden. Beispielsweise kann eine Information darüber, welche der Testfunksequenzen $16_1$ und $16_2$ erfolgreich empfangen wurden, eine Auswahl aus den für den erfolgreichen Empfang verwendeten Sendeeigenschaften $14_1$, $14_2$ verwendeten Sendeeigenschaften ermöglichen. Aus diesen erfolgreichen Sendeeigenschaften kann möglicherweise eine ausgewählt werden, die im Hinblick auf ein Optimierungskriterium, das für die Kommunikation zwischen dem Funk-Transceiver 10 und dem Funk-Transceiver 20 gelten kann, aber womöglich auch andere Funkkanäle zu anderen Funk-Transceivern berücksichtigen kann.

Die Testfunksequenzen $16_1$ und $16_2$ können als individuelle Nachrichten oder als eine kombinierte Nachricht ausgesendet werden. Unabhängig hiervon kann die Rückmeldung 22 als eine gemeinsame oder als eine individuelle Nachricht übermittelt werden oder, alternativ, als mehrere Nachrichten mit einer jeweils gruppenweise Bezugnahme.

Der Funk-Transceiver 10 ist ausgebildet, um für eine Übertragung der Funknachricht 12 an den Empfängerknoten 20 die ausgewählte Sendeeigenschaft zu verwenden.

Dies kann auch so verstanden werden, dass der Funk-Transceiver 10 eine Auswahl an beabsichtigten oder möglichen Sendeeigenschaften an den Funk-Transceiver 10 sendet und um basierend darauf, welche dieser Eigenschaften erfolgreich verwendet werden kann, eine Auswahl trifft, um die Funknachricht 12 auszusenden. Dies kann als Vorabauswahl oder Begrenzung des Entscheidungsraums verstanden werden, was eine fehlerhafte Überragung der Funknachricht 12 unwahrscheinlicher machen kann. Womöglich sind die Testfunksequenzen $16_1$ und $16_2$ von geringerer Nachrichtenlänge als die Funknachricht 12, so dass unter geringen Aufwänden im Hinblick auf eine Okkupation des Funkkanals für die größeren Nachrichten bereits ermittelt werden kann, wie diese möglichst erfolgreich übertragen werden.

Die Rückmeldung 22 wird bevorzugt, aber nicht notwendigerweise unter Verwendung einer Funkschnittstelle 26 des Funktransceivers 20 an eine Funkschnittstelle 24 des Funktransceivers 10 gesendet. Es ist problemlos möglich, für die Übermittlung der Rückmeldung 22 denselben oder einen anderen Kanal zu verwenden, der für die Aussendung der Testfunksequenzen 16 und der Funknachricht 12 verwendet wird.

Gemäß einem Ausführungsbeispiel kann der Funktransceiver 10 ausgebildet sein, um eine Auswahlinformation an den Empfängerknoten 20 zu senden, die die Mehrzahl von Testfunksequenzen als eine Auswahl aus einer Anzahl von vordefinierten Testfunksequenzen angibt. Wie es vorangehend erläutert wurde, können eine beachtliche Anzahl von Testfunksequenzen erhalten werden, wenn diese anhand der Sendeeigenschaft unterscheidbar sind. So kann aus einer einzelnen Bitsequenz 18 ohne Weiteres eine Anzahl von mehreren hundert Kombinationsmöglichkeiten unterschiedlicher Sendeeigenschaften erhalten werden. Durch Auswahl aus dieser Menge und durch Übermittlung an den Funktransceiver 20 ist es einerseits möglich, an die jeweilige Situation angepasst die Auswahl zu treffen und den Empfänger darüber zu informieren, was eine zu erwartende Testfunksequenz ist. So können beispielsweise für weniger beanstandete Empfängerknoten geringere Sendeleistungen ausgewählt werden als für weiter beabstandete Empfängerknoten. Alternativ oder zusätzlich kann aus einem Erfahrungswert, dass ein Kanal zu einem Empfängerknoten vorangehend gestört oder ungestört war, eine jeweils andere Auswahl bezüglich einer Coderate oder Modulationsrate getroffen werden. Ebenso kann eine Erkenntnis über eine eigene verbleibende Energiemenge oder einen Batteriezustand an der Gegenseite eine entsprechende Auswahl getroffen werden.

Die Auswahlinformation kann zusammen mit der Mehrzahl von Testfunksequenzen ausgesendet werden, etwa als gemeinsame Nachricht. So können auch die Testfunksequenzen $16_1$ und $16_2$ Teil einer gemeinsamen Funknachricht sein, etwa unterschiedliche Abschnitte hiervon beschreiben. Alternativ kann auch eine individuelle Aussendung erfolgen.

Gemäß einem Ausführungsbeispiel umfasst die Auswahlinformation eine Kennung, die mit der Testfunksequenz und der Sendeeigenschaft eindeutig assoziiert ist. Dies ermöglicht eine erhebliche Datenreduzierung im Sinne eines Codebuchs.

Die Sendeeigenschaft kann zumindest eines aus einer zum Senden einer Testfunksequenz verwendeten Datenrate, einer zum Senden der Testfunksequenz verwendeten Sendeleistung, eines zum Codieren der Testfunksequenz verwendeten Codes und einer Modulationsart zum Modulieren der Testfrequenz umfassen. Es ist alternativ oder zusätzlich auch möglich, eine Sendefrequenz als Sendeeigenschaft zu berücksichtigen.

Gemäß einem Ausführungsbeispiel ist der Funktransceiver 10 ausgebildet, um als Auswahlkriterium für die Auswahl der Sendeeigenschaft für die Funknachricht 12 eine minimale Funkkanalokkupation und/oder eine minimale Empfängerleistung am Knoten anzuwenden. Eine minimale Funkkanalokkupation kann dabei sowohl so verstanden werden, dass der Funkkanal für eine möglichst kurze Zeit belegt wird, etwa indem eine hohe Datenrate angelegt wird und/oder eine hohe Coderate. Dieses Kriterium kann aber ebenso erreicht werden, wenn in Kenntnis eines gestörten Kanals eine geringe Datenrate verwendet wird, da dann die jeweiligen einzelnen Bits länger oder für eine längere Zeitspanne detektierbar sind, was den Einfluss von Kurzzeitstörern auf den Empfang reduzieren kann. Dadurch, dass dann eine Neuübermittlung der Funknachricht unwahrscheinlicher wird, wird ebenfalls die Funkkanalokkupation minimiert.

In der Rückmeldung 22 kann für jede einzelne der Testfunksequenzen $16_1$ und $16_2$ angegeben werden, ob diese erfolgreich oder korrekt empfangen wurden. Es ist aber ebenso möglich, insbesondere bei Aussenden einer Anzahl von Testfunksequenzen, etwa zumindest 2, zumindest 5, zumindest 10, zumindest 15 oder zumindest 20, die Rückmeldung für eine Gruppe von Testfunksequenzen zu übermitteln. Die gruppenweise Rückmeldung kann das Bilden einer Gruppe etwa am Funktransceiver 10 oder am Funktransceiver 20 umfassen. So können beispielsweise die Gruppen basierend auf einer Ähnlichkeit der verwendeten Sendeeigenschaft gebildet werden, so dass ähnliche Sendeeigenschaften gemeinschaftlich zurückgemeldet werden. Die Rückmeldung kann dabei im Sinne einer Positivinformation für einen erfolgreichen Empfang und/oder als Negativinformation bezüglich eines fehlgeschlagenen Empfangs ausgeführt werden, was problemlos kombinatorisch durch Verwendung binärer Informationen möglich ist. Eine Gruppe von Testfunksequenzen 16 kann beispielsweise als erfolgreich oder nicht erfolgreich empfangen zurückgemeldet werden, wenn eine gewisse Anzahl aus der Gruppe erfolgreich bzw. nicht erfolgreich empfangen wurde.

Der Funktransceiver 10 kann aus den Sendeeigenschaften der erfolgreich empfangenen Testfunksequenzen diejenige Sendeeigenschaft für die Funknachricht 12 auswählen, die den geringsten Abstand zu einem Optimum eines Auswahlkriteriums aufweist. Alternativ oder zusätzlich kann der Funktransceiver 10 Sendeeigenschaften der nicht erfolgreich empfangenen Testfunksequenzen $16_1$, $16_2$ für die Funknachricht 12 vermeiden, die Auswahl also aus einem verbleibendem Suchraum treffen.

In anderen Worten kann bei Nutzung des Funkkanals durch viele überwiegend unkoordinierte Teilnehmer vor allem in großen Räumen wie beispielsweise Messehallen, Flughäfen, Bahnhöfen, Warenhäusern, Konzertsälen, Stadien oder dergleichen der Funkkanal stationäre Übertragungseigenschaften aufweisen. Die Ermittlung der Funksituation kann sehr häufig in einer geringen Messzeit, etwa mit weniger als 2 Sekunden, gelingen, worin die zeitliche Ausprägung, das heißt, die Verteilung von Sendedauer und Sendehäufigkeit zusammen mit dem Sendepegel erfasst werden kann. Dies kann erfindungsgemäß genutzt werden, um eine eigene Aussendung von Funksignalen möglichst erfolgreich, das heißt, mit einer geringen Fehlerrate und möglichst unidirektional, das heißt, ohne Funkrückfrage vorzunehmen. So kann in Kenntnis oder in Erwartung, dass die Funknachricht 12 erfolgreich übertragen wird, auf eine Bestätigung durch den Funktransceiver 20 verzichtet werden. Hierzu können die Übertragungsparameter, etwa Datenrate, Telegrammdauer, Codealphabet/Symbolraum und Sendeleistung im Rahmen eines Optimierungskriteriums optimal eingestellt werden. Es kann dabei angenommen werden, dass die Decodierung des empfangenen Funktelegrams, eine Funknachricht 12 sowie der Testfunksequenzen 16, fehlertolerant erfolgen kann. Die tolerierbaren Bit-Fehlerraten können, je nach Implementierung beispielsweise mit etwa 16 % angenommen werden, wie es unter anderem beim Empfang von amplitudenmodulierten Korrelationssignalen möglich ist.

Als Beispiele für störende Funksignale können beispielsweise spontane Funkaussendungen, die unter anderem auch Frequency-Hopping als Ursache haben können, umfassen. Beispiele hierfür sind beispielsweise Bluetooth® (LE), Funkaussendungen, die bewusst freie, das heißt, überwiegend unbenutzte Frequenzen im Frequenzband aufspüren, um dann dort eigene Funksingale, etwa mit Frequenz-Strom-Verfahren auszusenden, wie es beispielsweise beim Adaptive Frequency Hopping, AFH, ausgeführt wird. Ebenso können spontane oder regelmäßige Funksignale störende Eigenschaften aufweisen, etwa Signale, die zur Aufrechterhaltung von Funknetzwerken ausgesendet werden, spontane Funksignale, die unerwartete Ereignisse zum Anlass haben, etwa bestimmte Sensorereignisse oder Alarmierungsfälle aller Art. Auch breitbandige Funksignale, die zur Übermittlung mit hohen Datenraten kurzzeitig oder fortwährend ausgesendet werden, können als Störer wirken, etwa Wireless LAN, IEEE 802.11 und weitere.

Die erfindungsgemäße Lösung zur Übertragung von Funknachrichten kann dabei eine oder mehrere der folgenden Teilstrategien S1, S2 und S3 berücksichtigen.

S1: Lücken zwischen den Störimpulsen nutzen (*"in den Störlücken senden"*); und/oder

S2: an die Häufigkeit der (kurzen) Störpulse angepasst senden (*"Übertragungscode mit angepasster Fehlertoleranz wählen"*); und/oder

S3: Störsignale mit mehr Sendeleistung dominieren (*"stärker als die Störungspulse sein"*).

**Zur Teilstrategie S1: *"in den Störlücken senden"***

Die zeitliche Telegrammlänge TL (Sendedauer) ist bestimmt durch die Informationsmenge (bits) und die Symbolrate (Symbole/s) sowie der Informationsmenge pro Sendesymbol (bit/Symbol):

$$\text{Telegrammlänge TL [s]} = \frac{\text{Anz. Symbole } | S | \text{ [Sy]}}{\text{SyRate [Sy/s]}} \qquad (\text{Glg. 1})$$

$$\text{Telegrammlänge TL [s]} = \frac{\text{Informationsmenge IM [bits]} * \text{Informationsmenge pro Symbol [bit/Sy]}}{\text{SyRate [Sy/s]}} \qquad (\text{Glg. 2})$$

mit

$$\text{Datenrate DR [bit/s]} = \frac{\text{Informationsmenge IM [bits]}}{\text{Bitdauer [s]}} \qquad (\text{Glg. 3})$$

$$\text{SyRate [Sy/s]} = \frac{\text{Anz. Symbole [Sy]}}{\text{Symboldauer SD [s]}} \qquad (\text{Glg. 4})$$

$$\text{Inf.menge pro Symbol [bit/Sy]} = \frac{\text{Informationsmenge IM [bits]}}{\text{Anz. Symbole } | S | \text{ [Sy]}} \qquad (\text{Glg. 5})$$

Zum Befolgen der Teilstrategie S1 muss die Symbolrate an die zeitliche Länge der Lücken zwischen den Störpulsen angepasst werden, vorzugsweise maximiert werden, damit die Telegrammlänge und damit die Dauer der Funkaussendung minimal werden: Der Zweck ist die Minimierung der Sendeenergie und die minimale zeitliche Belegung des Funkkanals. Dies ist mit einer Erhöhung der Datenrate DR erreichbar. Ebenso ist auch möglich, die Telegrammdauer zeitlich zu vergrößern, damit der Anteil an gestörten Sendesymbolen durch Pulsstörer geringer wird. Das ist z. B. mit einer niedrigeren Datenrate DR erreichbar. Dies zu ermitteln, ist Gegenstand von Ausführungsbeispielen.

**Zur Teilstrategie S2: *"Übertragungscode mit angepasster Fehlertoleranz wählen"***

Es sei ein Coderaum $C_n$ angenommen, der synonym als Symbolalphabet bezeichnet werden kann und mehrere, d.h., n Sequenzen $C_i$ mit i = 1, .., n enthält, die sich hauptsächlich in der Anzahl der vorrätigen Symbole unterscheiden. Somit ist die Mächtigkeit $| C_i |$ eines Symbolalphabets die maximale Anzahl an verfügbaren Sequenzen für die Funkaussendung. Im Folgenden besitzt jedes Symbolalphabet die Mächtigkeit i . Ein Symbolalphabet $C_2$ enthält somit zwei Sequenzen, ein Symbolalphabet $C_{16}$ enthält somit 16 Sequenzen gleicher Länge bzw. Bitanzahl. Je übertragener Sequenz des Coderaums $C_{16}$ können demzufolge $\log_2(16) = 4$ bit Information übertragbar. In einem Coderaum $C_{256}$ können 256 Sequenzen zum Übertragen von 8 bit verwendet werden. Die einzelnen Sequenzen seien gut unterscheidbar, im Idealfall bilden die Sequenzen einen orthogonal aufgespannten Coderaum und sind zueinander jeweils unähnlich. Damit ist der maximale Informationsgehalt pro Sequenz, die als Symbol bezeichnet werden kann, [bit/Sy] genau $\log_2(i)$ bit pro Symbol/Sequenz. Der Begriff Symbolalphabet kann im Rahmen hierin erörterter Ausführungsbeispiele synonym für die bspw. 16 oder 256 bzw. n Sequenzen innerhalb des Coderaums/Codevorrats $C_n$ benutzt werden.

Im Rahmen von Ausführungsbeispielen ist vorgesehen, von einem ersten Coderaum $C_n$ zu einem anderen Coderaum $C_m$ zu wechseln, um mit anderer (bevorzugt besserer) Robustheit gegenüber Störern wie etwa Co-Channel-Interferer (CCI) oder CCI-Störern den Funckanal zu erproben, etwa mit einem Wechseln von n zu m mit n > m, bspw. n = 16 und m = 2, wobei beliebige andere Werte verwendet werden können.

Anmerkung: Beispiele aus der Informationstechnik sind hierzu die Hadamard-Matrizen, bestehend aus Binärfolgen.

Wählt man innerhalb eines Coderaums $C_n$ ein Symbolalphabet $C_i$ aus, stehen dem Funksender somit i Bit Information pro Sendesymbol zur Verfügung. Die Möglichkeit des Funkempfängers, diese Funksignale mit vorzugsweise hoher Informationsmenge pro Sendesymbol zu empfangen, ist stark durch Signal-zu-Rausch-und-Stör-Abstand S/(N+I) bestimmt. Je größer dieses Maß ist, umso leichter gelingt es dem Funkempfänger, die Sendesymbole mit geringerer Fehlerzahl zu rekonstruieren. Dies ist besonders wichtig, wenn sehr hohe Werte wie z.B. 8 bit/Symbol für die Sendesymbole angestrebt werden [siehe Kammeyer, K.D.: "Nachrichtenübertragung", Vieweg & Teubner, 4. Auflage, 2008]. Im Gegenzug sind besonders stark gestörte Funkkanäle mit einem sehr niedrigen Signal-zu-Rausch-und-Stör-Abstand Anlass, besonders störsichere, d. h. fehlertolerante Codierungen zu verwenden. Das geht einher mit niedrigen Werten von etwa 1 bit/Sendesymbol.

Gut geeignet für fehlertolerante Funkübertragung sind Korrelationsfolgen als Symbolalphabet [siehe Lüke, H. D.: Korrelationssignale, Springer, Berlin, 1992]. Sogenannte Gold-Codes können für die Länge 31 bits einen Codevorrat von bis zu 33 Folgen bilden [vgl. Gold, R.: "Optimal binary sequences for spread spectrum multiplexing (Corresp.)", Information Theory. In: IEEE Transactions on (1967), Vol. 13, Nr. 4, S. 619-621]. Nutzt man 32 der 33 Gold-Folgen als Symbolalphabet, so beträgt der Informationsgehalt dabei 5 bit/Symbol. Erlaubt man bei der Funkübertragung starke Störsignale, die dazu führen, dass bis zu 5 Bits innerhalb der 31 Bit der Funkaussendung gestört, d. h. beim Funkempfänger falsch geschätzt werden, zeigt sich, dass die Gold-Codes für die Länge 31 bits nur maximal 3 Fehlerbits für eine Rekonstruktion der Informationsdaten im Funkempfänger zulassen. Das entspricht einer Bitfehlerrate (BER) von 9,7%. Stärker gestörte Funkkanäle bedeuten, dass die Übertragung mit Gold-Codes nicht mehr ausreichend ist [vgl. Milosiu, H.: "integrierter UHF-Funkempfänger mit niedrigem Stromverbrauch und geringer Antwortzeit für die störsichere Datenübertragung". N&H Verlag GbR, Erlangen, 2013. Dissertation. ISBN 978-3-9808530-4-0). Eine zu hohe Fehlerzahl auf der Empfängerseite führt zu Verwechslungen verschiedener Symbole und damit zu falsch decodierten Informationen.

Gemäß einem Ausführungsbeispiel kann ein Funk-Transceiver 10 ausgebildet sein, um basierend auf der Rückmeldung 22 abzuleiten, welche der Testfunksequenzen von dem Empfängerknoten erfolgreich empfangen wurden. Der Funk-Transceiver 10 kann aus den Sendeeigenschaften der erfolgreich empfangenen Testfunksequenzen diejenige Sendeeigenschaft für die Funknachricht 12 auswählen, die zumindest näherungsweise eine höchste Datenrate, eine geringste Coderate und/oder eine geringste Sendeleistung aufweist. Gemäß einem Ausführungsbeispiel ist der Funk-Transceiver 10 ausgebildet, aus den Sendeeigenschaften der erfolgreich empfangenen Testfunksequenzen diejenige Sendeeigenschaft für die Funknachricht auszuwählen, die zumindest näherungsweise eine geringste Datenrate aufweist.

Gemäß einem Ausführungsbeispiel ist der Funk-Transceiver 10 ausgebildet, um sogenannte Gold-Codes mit einer Länge von 31 Bit als Testfunksequenz zu verwenden, da sich diese für die vorliegende Erfindung besonders gut eignen. Das generelle Konzept des Aussendens unterschiedlicher Nachrichten mit unterschiedlichen Sendeeigenschaften zum Erwarten einer Rückmeldung hierauf funktioniert jedoch auch bei anderen Sequenzen.

Die Teilstrategie S2 ist geeignet, das Symbolalphabet an die Störsituation im Funkkanal anzupassen. Dabei werden Störsignale in begrenztem Maße toleriert. Nach [Milosiu, H.: Integrierter UHF-Funkempfänger mit niedrigem Stromverbrauch und geringer Antwortzeit für die störsichere Datenübertragung. a.a.O.] existieren binäre Korrelationsfolgen 18 der Länge 31 bit, die eine Rekonstruktion der Sendeinformation erfolgreich im Funkempfänger bis etwa 16% Bitfehlerrate im Funkkanal ermöglichen. Für schwach bis kaum gestörte Funkkanäle sind Symbolalphabete mit sehr hohem Informationsgehalt pro Symbol geeignet. Hingegen sind für sehr stark gestörte Funkkanäle Symbolalphabete mit nur wenigen Symbolen und einem niedrigen Informationsgehalt pro Symbol geeignet. Ziel ist stets, den maximal möglichen Datendurchsatz für die Funkverbindung zu erreichen. Ein höherer Wert in bit/Symbol für das Symbolalphabet ist angestrebt. Dies zu ermitteln ist Gegenstand von Ausführungsbeispielen.

**Zur Teilstrategie S3**: *"stärker als die Störungspulse sein"*

Die Empfangspegel der Störpulse sollen hierbei von den Empfangspegeln der Nutzsignale übertroffen werden. Der erforderliche Pegelunterschied ist abhängig vom Modulationsverfahren, von der Informationsmenge pro Sendesymbol [bit/Sy] sowie von der Leistungsfähigkeit des Datendecoders im Funkempfänger. Die Bestimmung der erforderlichen Sendepegels ist Gegenstand von Ausführungsbeispielen.

Im Nachfolgenden werden zum verbesserten Verständnis der vorliegenden Erfindung allgemein formulierte Aspekte im Zusammenhang mit hierin erörterten Ausführungsbeispielen zusammengefasst. Die hierin verwendete spezielle Formulierung soll dabei die vorliegende Erfindung nicht auf den konkreten Anwendungsfall einschränken.

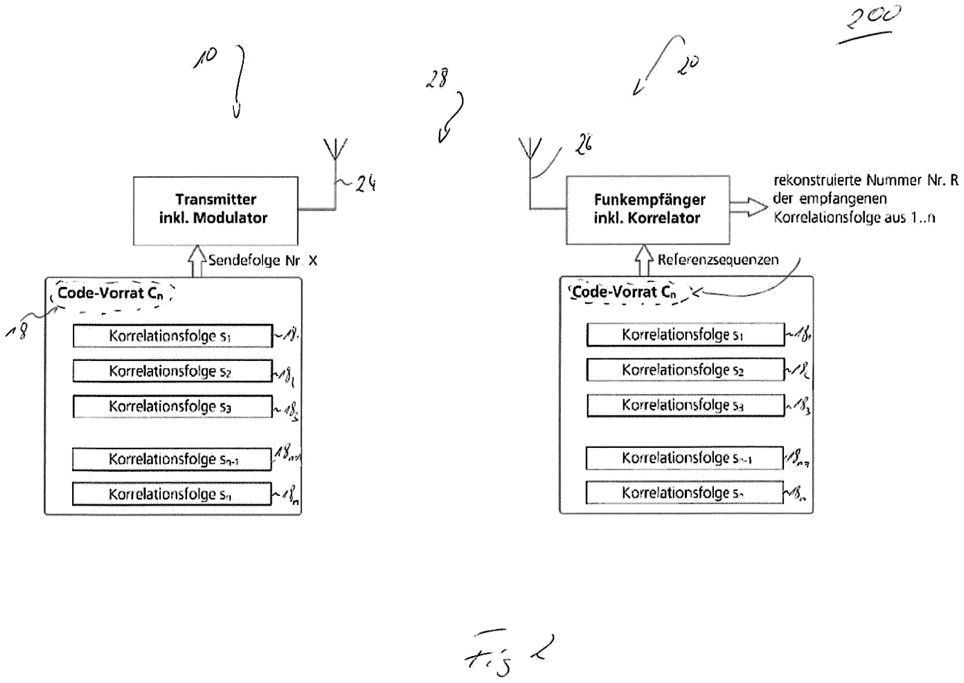

In der Fig. 2 ist ein drahtloser Übertragungskanal 28 zwischen den Funktransceivern 10 und 20 dargestellt, welche den Übertragungskanal 28 vermittels der Funkschnittstellen 24 bzw. 26 nutzen.

In anderen Worten, alle empfangenden (mobilen) Module - vorzugsweise mit Wake-Up-Receiver oder ULP-RX - erhalten diese Nachricht mit vorher festgelegtem Inhalt und können daraus auf die aktuellen Eigenschaften des Funkkanals zwischen Empfänger und Sender schließen. Dabei sind Gleichkanalstörer, Schwundeffekte durch Mehrwegeausbreitung sowie signifikantes Empfängerrauschen als Fehlerquelle für die digitale Übertragung detektierbar. Der Empfänger kann daraus ableiten, welche Code-Gruppen für die Übertragungssituation geeignet sind und auch, welche Mindestsendeleistung für fehlerarmen oder fehlerfreien digitalen Nachrichtenempfang erforderlich ist. Folgende Abbildung zeigt die Kommunikationssituation, bei der der Transmitter eine bestimmte Sendefolge Nr. X bezeichnet mit 32x, zur Modulation benutzt und das Funksignal abstrahlt. Die Sendefolge 32x kann beispielhaft eine Testfunksequenz 16 oder die Funknachricht 12 sein. Der Funkempfänger empfängt dieses Funksignal und ermittelt durch Korrelation der Empfangsfolge mit verschiedenen Referenzfolgen $s_{1..n}$ die Ähnlichkeit der Empfangsfolge mit Sequenzen aus dem Code-Vorrat $C_n$. Schließlich erfolgt die Ausgabe der Nummer R der Korrelationsfolge 18 mit größter Ähnlichkeit zur empfangenen Folge, falls die Fehlerzahl innerhalb der Empfangsfolge nicht zu groß ist.

Sollte spontan einer der Module einen Sendewunsch haben und eine Nachricht absenden wollen, ist die Sendeleistung anhand der aktuellen Ermittlung der Kanaleigenschaften (nur durch Empfang des QoS-Telegramms) mit dem aktuellen Mindestpegel bestimmbar und dazu die passende Code-Gruppe mit der höchsten Coderate auszuwählen. Dann sind Sendeleistung und Nutzdatenrate sowie Kanalbelegungsdauer optimal und eine effektive Nutzung des Funkkanals mit dem höchstmöglichen Datendurchsatz und der größtmöglichen Teilnehmerzahl erzielbar. Im günstigen Fall sind die Übertragungen unidirektional ohne Nachfrage und ohne Sendewiederholung möglich. Jedes Funkmodul stellt die individuelle Sendeleistung nur so hoch wie nötig und nicht so hoch wie möglich ein.

Dies ist vergleichbar mit einem Speisesaal mit vielen Personen, die sich unterhalten und den gemeinsamen akustischen Kanal verwenden. Ist jeder dazu bereit, möglichst leise, aber noch verständlich zu sprechen, ist insgesamt der Schallpegel im Saal minimal, mehr Gespräche können parallel geführt werden und wenige oder sogar keine Nachfragen sind nötig.

Entscheidend für diese Erfindungsmeldung ist die Unterscheidbarkeit der verwendeten Code-Sequenzen. Mit 2 Sequenzen kann man eine ersatzweise Signalisierung machen, deren Informationsgehalt $\log2 (2) = 1$ Bit/Sequenz beträgt. Für 4 unterscheidbare Sequenzen sind 2 Bit/Sequenz Information enthalten. Für 8 Sequenzen dann 3 Bit/Seq. und für 16 Sequenzen sind es schon 4 Bit/Sequenz (dies wird im Ausführungsbeispiel herangezogen). Dabei sind die verwendeten Code-Sequenzen vorzugsweise von der gleichen zeitlichen Länge. Vorzugsweise weisen die Sequenzen gute Korrelationseigenschaften auf und besitzen eine Autokorrelationsfunktion, die nur ein Hauptmaximum und Nebenmaxima mit sehr niedriger Höhe - der Abstand vom Haupt- zu Nebenmaxima (HNA) sollte maximal hoch sein. Dies wird z. B. von Pseudo-Noise-Sequenzen (PN-Seq.) erfüllt. Hinzu kommt noch die Eigenschaft, dass die Form der Kreuzkorrelation (d. h. die Korrelation zwischen der Referenz-Sequenz und der empfangenen, leicht fehlerbehafteten Sequenz) noch die Eigenschaften des großen HNA-Wertes sowie die Ausprägung eines einzigen Hauptmaximums erfüllt. Diese geforderte Fehlertoleranz muss für alle Code-Sequenzen aus dem Codevorrat $C_n$ erfüllt sein. Hinzu kommt die weitere Forderung an die Code-Sequenzen, dass Verwechslungen oder Ähnlichkeiten mit den Code-Sequenzen aus dem gemeinsamen Codevorrat $C_n$ vermieden werden. Dies ist bis zu einer bestimmten Anzahl an Empfangsfehlern auch erfüllbar. So zeigt sich, dass bei größer werdendem Codevorrat $C_n$ die tolerierbare Fehlerzahl pro empfangender Sequenz abnimmt.

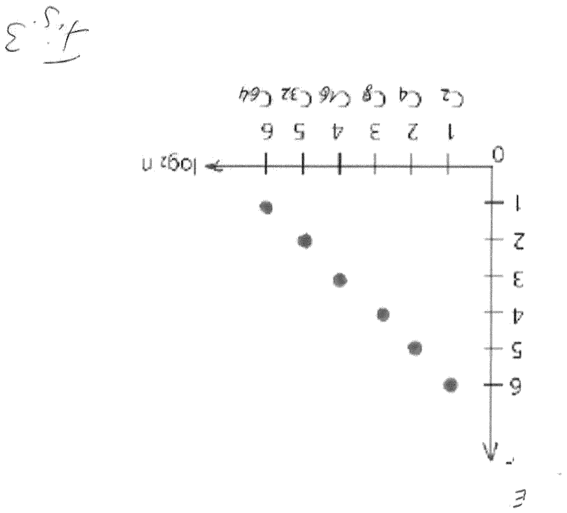

Fig. 3 zeigt ein exemplarisches Diagramm, bei dem eine tolerierbare Fehleranzahl E an der Ordinate gegenüber einem Empfang einer Sequenz aus dem Codevorrat $C_n$ der Größe des Coderaums $C_n$ an der Abszisse aufgetragen ist (logarithmische Skala). Treten beim Empfang einer bestimmten erwarteten Sequenz zu viele Fehler auf, das heißt, statt erwarteter binärer Symbole wie "1" wird eine "0" empfangen oder andersherum, ist eine eindeutige Korrelation mit der erwarteten Sequenz nicht mehr möglich. Verwechslungen mit anderen Sequenzen oder keine Zuordnung zu Sequenzen aus dem Codevorrat $C_n$ sind dann die Folge.

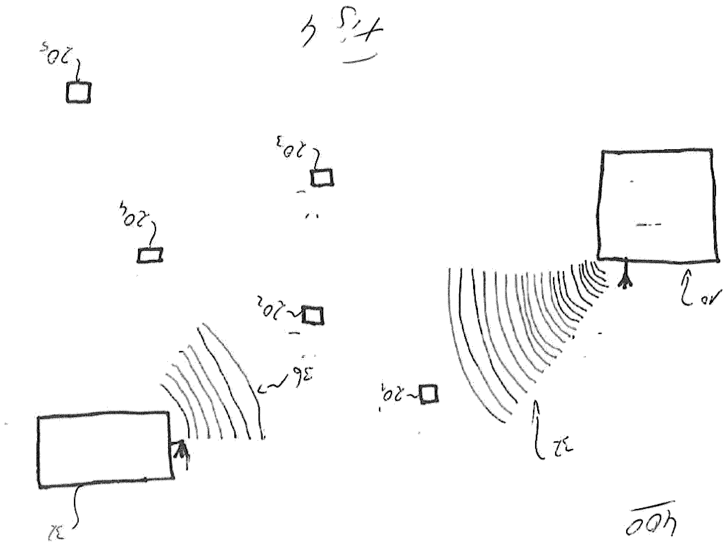

Fig. 4 zeigt ein schematisches Blockschaltbild eines Funknetzwerks 400 gemäß einem Ausführungsbeispiel. Das Funknetzwerk 400 umfasst beispielsweise zumindest einen der Funktransceiver 10 und mehrere der Funktransceiver 20, dargestellt als Funktransceiver $20_1$ bis $20_5$. Der Funktransceiver 10 ist ausgebildet, um die Sendefolge 32, auszusenden. Die Funktransceiver $20_1$ bis $20_5$ können mobil oder ortsfest sein und das Funksignal 32 empfangen. Daneben empfangen die Funktransceiver oder Knoten $20_1$ bis $20_5$ auch Störsignale, etwa ausgesendet von einem Co-Channel-Interferer (CCI) 32, das heißt, ein CCI-Störer bzw. eine Vorrichtung, die eine Sendefolge oder ein Störsignal 36 im selben Funckanal abstrahlt, in welchem auch die Sendefolge 32 abgestrahlt wird.

Es können auch mehrere Störer im Netzwerk aktiv sein. Die Funktransceiver $20_1$ bis $20_5$ können eine Überlagerung vieler Störsignale mit dem gewollten Funksignal 32 empfangen. Ein Ansatz vorliegender Ausführungsbeispiele besteht darin, dass das speziell ausgestaltete Funktelegram S1 des Funktransceivers 10 für zumindest einen der Knoten $20_1$ bis $20_5$ geeignet ist, selbstständig günstige und ungünstige Übertragungsparameter, das heißt, Sendeeigenschaften wie Datenrate, Sendeleistung und/oder Symbolalphabete zu bestimmen. Das kann als Phase des Monitorings verstanden werden.

Gemäß einer exemplarischen Ausgestaltung kann das Monitoring wie folgt ausgeführt werden: Die Broadcastmessage S1 ist eine Zusammenstellung von mehreren Telegrammen: (Telegramm, TG, -Wort, etwa eine Korrelationssequenz mit einer beispielhaften Länge von 32 bits.

$DR_{1...D}$ mit DR= $1/T_B$ ← Variation in Datenrate (also Variation der Telegrammdauer);

DR z.B. 1kbps, 10kbps, 100kbps, 1Mbps

2..$n_{max}$ ← Variation in Coderaum/Codealphabet $C_n$ z. B. $C_2, C_4, C_8, ..., C_{64}$→ Informations-dichte

$\log_2(n)$ bit/Sequenz.

$P_{TX1...P}$          ← Sendeleistung $P_{TX}$ z.B. -10dBm, 0dBm, +10dBm

→ Insgesamt ergeben sich D*nmax*P Kombinationsmöglichkeiten für die Nachricht oder Message $M_{D \times n\_max \times P}$

Dabei gilt beispielhaft die Attributenliste A(DR, n, PTX) =

$\{(DR_1, n_1, P_{TX1}), (DR_1, n_2, P_{TX1}), ..., (DR_1, n_{max}, P_{TX1}),$

$(DR_2, n_1, P_{TX1}), (DR_2, n_2, P_{TX1}), ..., (DR_2, n_{max}, P_{TX1}),$

...,

$(DR_D, n_1, P_{TX1}), (DR_D, n_2, P_{TX1}), ..., (DR_D, n_{max}, P_{TX1}),$

$(DR_D, n_1, P_{TX1}), (DR_D, n_2, P_{TX1}), ..., (DR_D, n_{max}, P_{TX1}),$

$(DR_1, n_1, P_{TX2}), (DR_1, n_2, P_{TX2}), ..., (DR_1, n_{max}, P_{TX2}),$

...,

$(DR_D, n_1, P_{TXP}), (DR_D, n_2, P_{TXP}), ..., (DR_D, n_{max}, P_{TXP})\}$

Ausführungsbeispiele sehen vor, übergeordnet oder vermittels geeigneter lokaler Auswertekriterien eine Unterauswahl an möglichen Testfunksequenzen oder Messages zu bestimmen und bspw. mit einer Auswahl-ID zu versehen. Dies geschieht vor der Funkaussendung. Die Zuordnung der Unterauswahl zur Auswahl-ID ist sowohl der Sende-Einheit als auch allen empfangenden Knoten bekannt. Damit genügt die Nennung der Auswahl-ID innerhalb des Funkaussendung S1, um den Knoten das Sendeschema und die zu erwartenden Funktelegramme mitzuteilen.

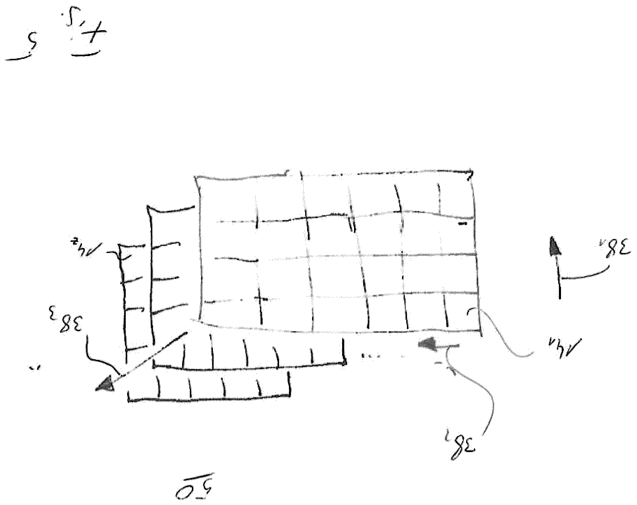

Fig. 5 zeigt eine schematische Darstellung eines Kombinationsraumes 50 zur Veranschaulichung derartiger Kombinationen. Der Kombinationsraum 50 wird beispielhaft durch drei Dimensionen $38_1$ bis $38_3$ aufgespannt. Beispielsweise kann die Dimension $38_1$ eine Datenrate DR beschreiben, die Dimension $38_2$ einen Coderaum und die Dimension $38_3$ eine Sendeleistung $P_{TX}$. Gemäß Ausführungsbeispielen kann der Kombinationsraum 50 durch zumindest eine, bevorzugt zumindest zwei Dimensionen aufgespannt werden, die bevorzugt aus der Liste der verwendeten Datenrate, der verwendeten Sendeleistung, der verwendeten Codes, der verwendeten Modulationsart und der verwendeten Frequenz stammen.

Jede der hieraus erhaltenen Kombinationen kann eine Sendeeigenschaft $14_1$ bis $14_z$ definieren.

Gemäß Ausführungsbeispielen ist ein Funktransceiver 10 ausgebildet, um die Mehrzahl von Testfunksequenzen 16 mit unterschiedlichen datenraten, unterschiedlichen Sendeleistungen und unterschiedlichen Codes auszusenden.

Aus der erhaltenen hohen Anzahl von möglichen Kombinationen und implementierbaren Sendeeigenschaften 14 ergibt sich eine vorteilhafte Ausgestaltung dahin gehend, dass der Funktransceiver 10 eine Auswahl der verwendeten Sendeeigenschaften 14 als Auswahlinformation ankündigt. Die Auswahlinformation kann zeitlich vor, mit oder nach den Testfunksequenzen ausgesendet werden, wobei die Auswertung auf Seiten der Testfunkreceiver 20 besonders unterstützt wird, wenn zum Empfang der Testfunksequenzen 16 die Auswahlinformation bereits vorliegt.

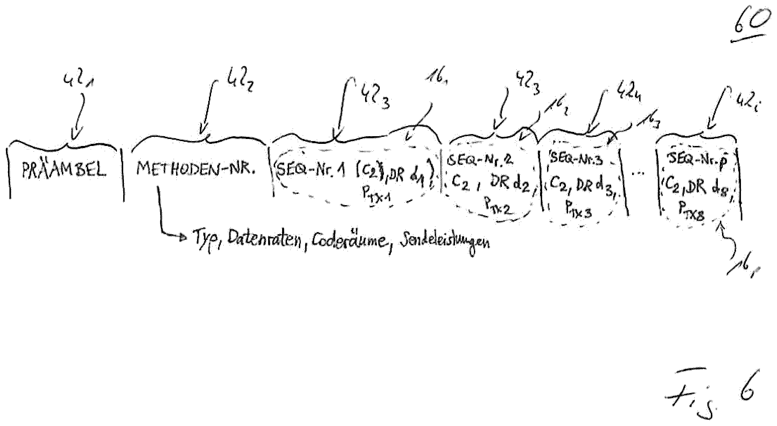

Fig. 6 zeigt ein schematisches Blockdiagramm eines möglichen Funktelegramms 60 gemäß einem Ausführungsbeispiel. Das Funktelegramm 60 kann mehrere Abschnitte $42_1$ bis $42_i$ umfassen. Darunter sind beispielhaft eine Präambel $42_i$, die womöglich zur Synchronisation oder dergleichen genutzt werden kann. In einem weiteren Feld $42_2$ können eine oder mehrere Methoden angekündigt werden, etwa unter Verwendung einer Methodennummer. Diese Methodennummer kann als ID (Identifier) verstanden werden, der womöglich eindeutig den oder die verwendeten Sendeeigenschaften angibt. Beispielsweise können Typ, Datenraten, Coderäume, Sendeleistungen oder andere Sendeeigenschaften damit benannt werden, das Feld $42_2$ kann insofern die Auswahlinformationen tragen. Im Weiteren kann das Funktelegramm 60 ein oder mehrere, etwa die in dem Feld $42_2$ angekündigten Testfunksequenzen $16_1$ bis $16_p$. Diese können als ausgewählte Testfunksequenzen übermittelt werden und sich beispielsweise in jeweils zumindest einem der Parametercoderäume C, Datenrate DR und Sendeleistung $P_{TX}$ unterscheiden. So wird beispielsweise die Testfunksequenz $16_2$ mit einer anderen Datenrate und einer anderen Sendeleistung, aber gleichem Coderaum übertragen. Diese Darstellung ist lediglich beispielhaft, um zu verdeutlichen, wie eine Übertragung von Testfunksequenzen im Rahmen der vorliegenden Erfindung ausgeführt werden kann.

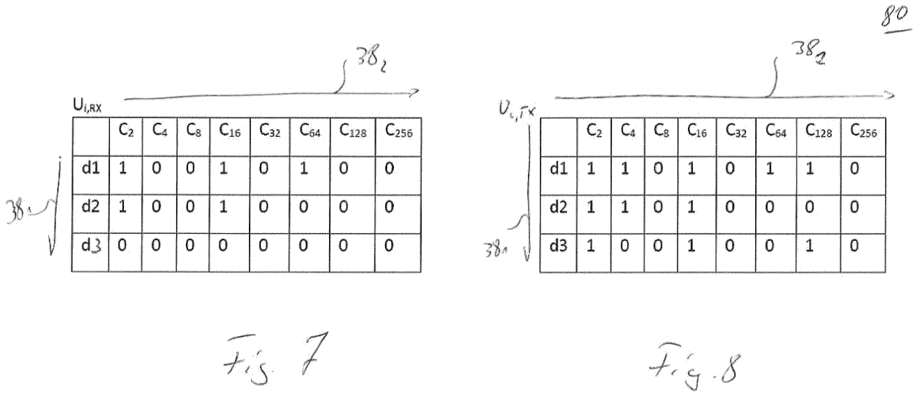

Ausgehend hiervon zeigen die Fig. 7 und 8 beispielhafte Implementierungsausgestaltungen zum Aspekt der Auswertung. Der oder die empfangenden Funktransceiver 20 können beispielsweise die gültigen, das heißt, die Gesamtheit der decodierbaren, also erfolgreich decodierten, Testfunksequenzen mit der erwarteten Unterauswahl vergleichen, also derjenigen Untermenge, die beispielsweise im Feld $42_2$ bzw. der Auswahlinformation übertragen wurde. Fig. 7 zeigt beispielsweise eine schematische Darstellung einer Unterauswahl $U_{i,RX}$ in einer tabellarischen Darstellung, in welcher beispielhaft die Dimensionen $38_1$ als Datenrate und $38_2$ als Coderaum aufgetragen sind. Der Eintrag 1 kann bedeuten, dass die Testfunksequenz korrekt empfangen und decodiert werden konnte, 0 heißt beispielsweise, dass keine Erkennung möglich ist. Zwar kann in Form einer binären Darstellung auch eine inverse Darstellung gewählt werden, die beschriebene Implementierung ermöglicht aber eine vorteilhafte Ausnutzung einer XOR-Verknüpfung, worauf später noch eingegangen wird.

Fig. 8 zeigt eine schematische Darstellung einer möglichen Auswahlinformation 80, wie sie beispielsweise im Feld $42_2$ übertragen werden kann. Dort sind für einen übereinstimmenden Darstellungsraum mit den Dimensionen $38_1$ und $38_2$ die Unterauswahl $U_{i,TX}$ dargestellt. Für dieselben Kombinationen aus den Dimensionen $38_1$ und $38_2$, etwa Datenrate D1 bis D3 und Coderaum $C_2$ bis $C_{255}$ können Einträge mit einer "1" bedeuten, dass diese vermittels der Auswahlinformation angekündigt werden. Anders ausgedrückt kann ein Eintrag "1" bedeuten, dass eine entsprechende Testfunksequenz 16 mit dieser Konfiguration ausgesendet wurde. Zusätzliche mögliche Dimensionen wurden zur besseren Übersicht vorliegend nicht dargestellt. Es ist dabei möglich, aber nicht notwendig, dass Details zu Dimension $38_1$ und/oder weitere Dimensionen ebenfalls übertragen werden. Diese können bereits vordefiniert sein, so dass eine reine Bitfolge, etwa Zeile für Zeile oder Spalte für Spalte für die jeweilige Gegenseite eindeutig interpretierbar ist.

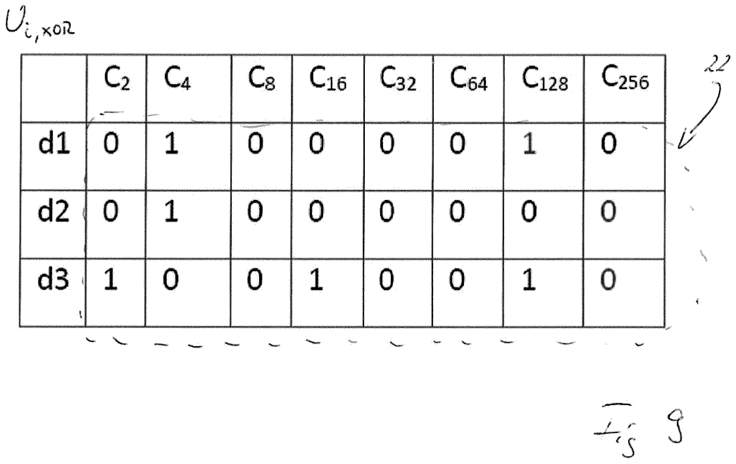

Fig. 9 zeigt eine schematische Darstellung zumindest eines Teils der Rückmeldung 22, die aus den Unterauswahlen der Fig. 7 und 8 erhalten werden kann, etwa indem der Funktransceiver 20 eine XOR-Verknüpfung ausführt. Dies kann eine Vereinfachung und Reduktion des Sendeaufwands, das heißt, der Datenmenge für den Funktransceiver 20 bedeuten. Gleichzeitig wird deutlich, dass jede andere Art des Vergleichs der erwarteten Funksequenzen mit tatsächlich empfangenen Funksequenzen $U_{i,RX}$ erfolgen kann, wobei die erwarteten Funksequenzen eine vollständige oder teilweise Abbildung des Kombinationsraums 50 umfassen kann.

Der Funktransceiver 20 kann ausgebildet sein, um einen Vergleich der tatsächlich empfangenen Unterauswahl $U_{i,RX}$ und der erwarteten Unterauswahl $U_{i,TX}$ vorzunehmen. Ein beispielsweise verwendeter XOR-Vergleich mit den Unterauswahlen $U_{i,RX}$ mit $U_{i,TX}$ zur Abbildung auf eine Menge $U_{i,XOR}$ kann damit bedeuten, dass ein "1"-Eintrag so interpretierbar ist, dass ein Empfang und Decodierung nicht dem Sendetelegramm, der Testfunksequenz entsprechen. Die Darstellung gemäß der Fig. 9 kann insofern auch als Fail-Tabelle verstanden werden. Denkbar sind auch sogenannte False-Detektionen, d. h., die Sequenzen wurden fälschlicherweise missinterpretiert. Wurden Telegramme bzw. Testfunksequenzen fälschlicherweise decodiert, die jedoch nicht gesendet bzw. erwartet wurden, ist dies ebenfalls mit einem "1"-Eintrag in der XOR-Tabelle sichtbar und ein Indikator für Funkstörungen.

Auch hier kann zwar eine Übermittlung in einer Tabellenstruktur oder dergleichen erfolgen, es genügt aber, wenn der jeweilige Empfänger, der Testfunkreceiver 10, die erhaltene Information korrekt interpretieren kann.

Die Übertragung der sequenziellen Folge kann, zum Zwecke der höheren Robustheit bzw. Toleranz gegenüber Übertragungsfehlern mit zwei Ersatzcodes für "0" und "1" erfolgen. Die Sendeart für die Rückmeldung 22 sollte möglichst störsicher und gegebenenfalls mit Wiederholungen gewählt werden. Im Falle des fehlerfreien Empfangs genügt auch eine kürzere Positivmeldung ohne die einzelnen Werte der Tabelle $U_{1,XOR}$. Hierfür kann beispielsweise ein spezieller Code verwendet werden, der für die gesamte Tabelle oder einen Teil hiervon eine positive oder negative Rückmeldung angibt.

Der Funktransceiver 20 ist somit ausgebildet, um eine Mehrzahl von miteinander verschiedenen Sendeeigenschaften aus gesendeten Testfunksequenzen 16 von einem Sendeknoten, den Funktransceiver C zu empfangen und ist ausgebildet, um die Rückmeldung 22 auszusenden, die eine mit einem Empfang der Mehrzahl von Testfunksequenzen durch den Funktransceiver 20 assoziierte Information aufweist. Wie es anhand der Fig. 6 dargestellt ist, kann der Funktransceiver 20 ausgebildet sein, um eine Auswahlinformation zu erhalten, die für die Mehrzahl von Testfunksequenzen gilt und eine Menge von vordefinierten Testfunksequenzen mit einer jeweils zugeordneten Sendeeigenschaft als eine Auswahl angibt, die die Mehrzahl von Testfunksequenzen des Funktransceivers 10 bildet.

Beispielsweise kann der Funktransceiver 20 ausgebildet sein, um in der Rückmeldung 22 anzugeben, welche der Mehrzahl von Testfunksequenzen, denen jeweils eine Sendeeigenschaft zugeordnet ist, erfolgreich empfangen wurden und/oder um in der Rückmeldung anzugeben, welche der Mehrzahl von Testfunksequenzen, denen jeweils eine Sendeeigenschaft zugeordnet ist, nicht erfolgreich empfangen wurden. Gemäß einem Ausführungsbeispiel kann der Funktransceiver 20 ausgebildet sein, um basierend auf der Auswahlinformation eine binäre Information mit der Rückmeldung 22 zurückzugeben, die einen erfolgreichen und/oder nicht erfolgreichen Empfang zumindest einer Testfunksequenz 16 angibt. Das bedeutet, die Rückmeldung 22 kann sich möglicherweise auch nur auf einen Teil der empfangenen Testfunksequenzen beziehen. So kann es in manchen Ausgestaltungen ausreichend sein, beispielsweise die am besten empfangenen Testfunksequenzen anzugeben, etwa eine vordefinierte Anzahl hiervon und/oder diejenigen Testfunksequenzen, die mit einer Empfangsqualität von zumindest einem Empfangsschwellwert empfangen werden. Komplementär kann dies ebenso für nicht oder nicht gut genug empfangene Testfunksequenzen angegeben werden.

Es bestehen noch weitere Möglichkeiten, um in der Rückmeldung 22 einen erfolgreichen und/oder nicht erfolgreichen Empfang für eine Gruppe von zumindest zwei der Mehrzahl von Testfunknachrichten kombinatorisch anzugeben, wozu der Funktransceiver 20 ausgebildet sein kann.

Der Funktransceiver 20 kann ausgebildet sein, um die Rückmeldung 22 für zumindest eine Testfunksequenz 16 basierend auf einer XOR-Verknüpfung eines Binärwerts für einen erwarteten Empfang der zumindest einen Testfunksequenz, etwa aus der Auswahlinformation 80, und eines Binärwerts für einen erfolgreichen Empfang der zumindest einen Testfunksequenz zu erhalten, siehe hierzu die Fig. 7 und im Ergebnis die Fig. 9.

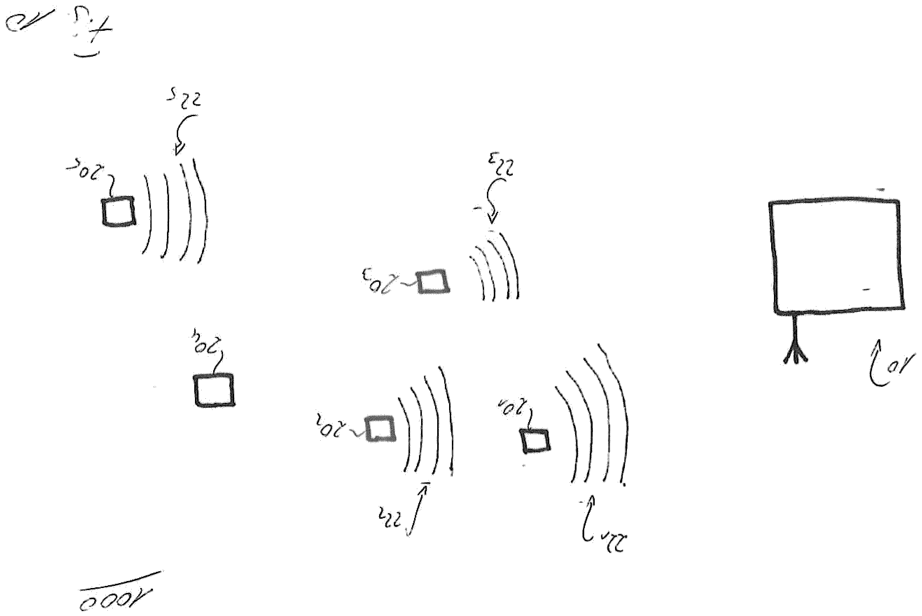

Fig. 10 zeigt ein schematisches Blockschaltbild eines Funknetzwerks 1000 gemäß einem Ausführungsbeispiel. Dies kann beispielsweise ebenso wie das Funknetzwerk 400 den Funktransceiver 10 und die Funktransceiver $20_1$ bis $20_5$ umfassen. Beispielsweise wurde eine Mehrzahl von Testfunksequenzen, womöglich in Form eines Funktelegramms ähnlich des Funktelegramms 60, dieselben Testfunksequenzen übermittelt. Die Funktransceiver $20_1$, $20_2$, $20_3$ und $20_5$ konnten diese beispielsweise zumindest teilweise korrekt empfangen und übermitteln entsprechende Rückmeldungen $22_1$, $22_2$, $22_3$ bzw. $22_5$. Beispielsweise übermittelt der Funktransceiver $20_4$ keine Rückmeldung, etwa aufgrund zu weniger oder keiner korrekt empfangenen Testfunksequenzen. So kann der Funktransceiver $20_4$ ausgebildet sein um die Rückmeldung nicht zu senden, wenn ein Anteil nicht erfolgreich empfangener Testfunksequenzen aus der Mehrzahl von Testfunksequenzen einen vordefinierten Schwellwert übersteigt, etwa ein Drittel, die Hälfte oder mehr.

Es kann optional auch davon ausgegangen werden, dass ein Ausbleiben der Rückmeldung bedeutet, dass sämtliche Testfunksequenzen hinreichend gut empfangen wurden, wobei dies womöglich einen hinreichend guten Kanal zwischen den Funktransceivern erfordern kann, insbesondere, wenn sämtliche der Funktransceiver 10 und 20 sowohl zum Aussenden der Testfunksequenzen als auch zum Bereitstellen der Rückmeldung konfiguriert sind.

In anderen Worten senden in der Phase der Rückmeldung die verteilten Knoten die Empfangsberichte zurück. Falls sehr viele Empfangsfehler, d. h. kaum erfolgreiche Decodierungen, vorliegen, kann die Aussendung der Empfangsberichte ggf. entfallen, wie es für den Funk-Transceiver $20_4$ dargestellt ist. Eine einfache Art der Rückmeldung kann es sein, die binären Einträge für $U_{i,RX}$ als sequenzielle Folge zu senden. Der Funk-Transceiver 10 kann am Ausbleiben der Empfangsberichte die stark gestörte Funksituation erkennen. Die Rücksendung der Empfangsberichte, der Rückmeldungen 22, kann im selben Funkkanal oder in einem anderen Funkkanal erfolgen. Die Sendeart, etwa eine Modulationsart, ein Symbolalphabet, eine Datenrate oder dergleichen können von der Modulation, der Datenrate und dem Symbolalphabet der Funkaussendung des Funk-Transceivers 10 abweichen.

In einem Abschnitt der Interpretation kann der Funktransceiver 10 die Empfangsberichte $22_1$, $22_2$, $22_3$, $22_5$ der verteilten Knoten annehmen bzw. empfangen.

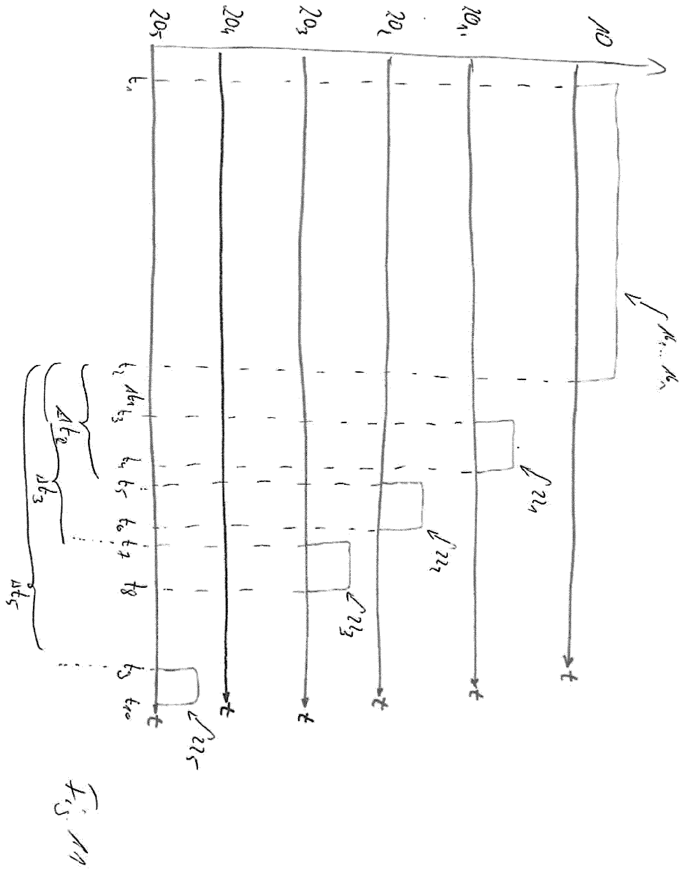

Fig. 11 zeigt ein schematisches Zeitdiagramm einer bevorzugten Ausgestaltung des Funknetzwerks 1000. Anhand der Fig. 11 wird eine Implementierung einer Kollisionsvermeidungsstrategie der Mehrzahl von Funktransceivern $20_1$ bis $20_5$ beschrieben. Eine Kollisionsvermeidungsstrategie beim Aussenden der jeweiligen Rückmeldungen $22_1$, $22_2$, $22_3$ und $22_5$ kann vorteilhaft sein, um eine Kollision am Funktransceiver 10 zu vermeiden, womit die Wahrscheinlichkeit erhöht wird, dass dieser die Information auch korrekt auswerten kann.

So kann beispielsweise jedem der Mehrzahl von Funk-Transceivern $20_1$ bis $20_5$ eine Kennung zugewiesen sein, möglicherweise, aber nicht notwendigerweise unter Verwendung einer MAC-Adresse oder sonstiger Kennungen. Die Funk-Transceiver $20_1$ bis $20_5$ können ausgebildet sein, um die jeweilige Rückmeldung 22 mit einer Zeitverzögerung bezüglich der Testfunksequenzen $16_1$ bis $16_n$, etwa bezogen auf eine erste oder letzte der Testfunksequenzen, auszusenden. Die Zeitverzögerung $\Delta t_1$, $\Delta t_2$, $\Delta t_3$ und $\Delta t_5$ kann mit der Kennung assoziiert sein, was eine effiziente Implementierung der Kollisionsvermeidungsstrategie ermöglicht, da unterschiedliche Kennungen zu unterschiedlichen Zeitverzögerungen führen. Darüber hinaus ermöglicht dies eine Interpretation am Funk-Transceiver 10 dahingehend, dass ein Ausbleiben einer Rückmeldung mit einem dem Funk-Transceiver 204 zugeordneten Zeitintervall entsprechend interpretiert wird, etwa kein oder unzureichender Empfang der Testfunksequenzen.

Alternativ oder zusätzlich kann das Funknetzwerk und/oder der Funk-Transceiver 10 ausgebildet sein, um basierend auf den Rückmeldungen $22_1$ bis $22_5$ und/oder basierend auf dem Ausbleiben von Rückmeldungen Konnektivitätsinformationen abzuleiten, welcher Funk-Transceiver über welchen Pfad im Funknetzwerk erreichbar oder nicht erreichbar ist.

Gemäß Ausführungsbeispielen können ein oder mehrere Funk-Transceiver 10 und ein oder mehrere Funk-Transceiver 20 im Funknetzwerk betrieben werden, wobei diese kombinatorisch, etwa im Sendefall und im Empfangsfall, auch gleich ausgebildet sein können und lediglich in unterschiedlichen Betriebsarten betrieben werden.

Der Funk-Transceiver 10 kann ausgebildet sein, um an unterschiedliche Funk-Transceiver 20 unterschiedlich konfigurierte Mehrzahlen von Testfunksequenzen auszusenden, die unter Verwendung gleicher Bitsequenzen und unterschiedlicher Sendeeigenschaften erhalten werden. Anders als in der Fig. 11 dargestellt, können deshalb mehrere Gruppen von Testfunksequenzen ausgesendet werden, etwa um einzelne Funk-Transceiver 20 oder Gruppen hiervon gezielt anzusprechen.

In der Interpretationsphase kann die sendende Station 10 nun die Rückmeldungen oder Empfangsberichte 22 erhalten. Die verteilten Knoten 20 können beispielsweise zeitversetzt senden, wobei der Zeitversatz möglicherweise, aber nicht notwendigerweise abhängig von der Knoten-ID sein kann, um Sendekollisionen zu vermeiden. Unter Verweis auf die Fig. 7 bis 9 kann anhand der "1"-Einträge in den Rückmeldungen bzw. der Tabelle $U_{1,XOR}$ der Funk-Transceiver 10 bestimmte Coderäume, bestimmte Datenraten, bestimmte Sendeleistungen oder Kombinationen hieraus als "zu vermeiden" und/oder "zu verwenden" markieren, etwa um eine Kommunikationstabelle oder Konnektivitätsinformation für einen oder mehrere der RX-Knoten 20, bis $20_5$ zu erhalten.

Der Funk-Transceiver 10 kann ausgebildet sein, um basierend auf der Mehrzahl von Testfunksequenzen Rückmeldungen von unterschiedlichen Empfängerknoten zu erhalten, und um die Sendeeigenschaft für eine Übermittlung einer Funknachricht an den jeweiligen Empfängerknoten aus der jeweiligen Rückmeldung auszuwählen.

Alternativ oder zusätzlich kann der Funk-Transceiver 10 ausgebildet sein, um die Mehrzahl von Testfunksequenzen als eine erste Mehrzahl von Testfunksequenzen an den Empfängerknoten als einen ersten Empfängerknoten zu senden und um eine andere Mehrzahl von Testfunksequenzen an einen anderen Empfängerknoten zu senden, das bedeutet, an unterschiedliche Funk-Transceiver 20. Bevorzugt ist es, wenn die unterschiedlichen Mehrzahlen von Testfunksequenzen eine gleiche Bitlänge aufweisen und unterschiedlich ausgewählte Teilmengen einer vordefinierten Gesamtmenge an Testfunksequenzen sind, etwa den im Zusammenhang mit der Fig. 2 beschriebenen Korrelationsfolgen.

Der Funk-Transceiver 10 kann somit ausgebildet sein, um aus einer jeweiligen Rückmeldung 22 abzuleiten, dass der aussendende Funk-Transceiver 20 für den Funk-Transceiver 10 erreichbar ist, um eine Konnektivitätsinformation zu erhalten. Eine derartige Konnektivitätsinformation kann lokal gespeichert und verwendet werden, kann alternativ aber auch einer anderen Vorrichtung bereitgestellt werden, etwa einem dezentralen Knoten und/oder einer zentralen Instanz.

In einer bevorzugten Ausgestaltung der vorliegenden Erfindung kann für Datenübertragungen ein Coderaum mit möglichst hoher Informationsdichte, etwa $C_{256}$, niedriger Sendeleistung und hoher Datenrate, etwa 1 Mbps, gewählt werden. Dann wird der Funkkanal durch die Funknachricht 12 minimal belegt. Es kann auch gewünscht sein, dass die Datenrate minimal sein soll, wenn die Funkempfänger in den jeweiligen Funk-Transceivern $20_1$ bis $20_5$ dadurch einen minimalen Leistungsverbrauch aufweisen.

Gemäß einem Ausführungsbeispiel ist der Funk-Transceiver 10 ausgebildet, um die Testfunksequenzen 16 basierend auf einem Trägerereignis, einer Benutzereingabe, basierend auf einer bevorstehenden Übermittlung der Funknachricht oder in regelmäßigen Intervallen auszusenden. Dies kann es ermöglichen, beim Auftreten des Sendewunsches für die Funknachricht 12 bereits brauchbare Konnektivitätsinformationen bzw. Auswahlen zur Sendeeigenschaft vorliegen zu haben.

Gemäß einem Ausführungsbeispiel ist der Funk-Transceiver 10 ausgebildet, um eine zumindest den Empfängerknoten identifizierende Information zusammen mit der Mehrzahl von Testfunksequenzen auszusenden. Alternativ kann auch eine Gruppe oder sämtliche Empfängerknoten, die Funk-Transceiver 20, identifizierende Information ausgesendet werden, um anzuzeigen, dass von diesen Knoten eine Rückmeldung angefordert wird.

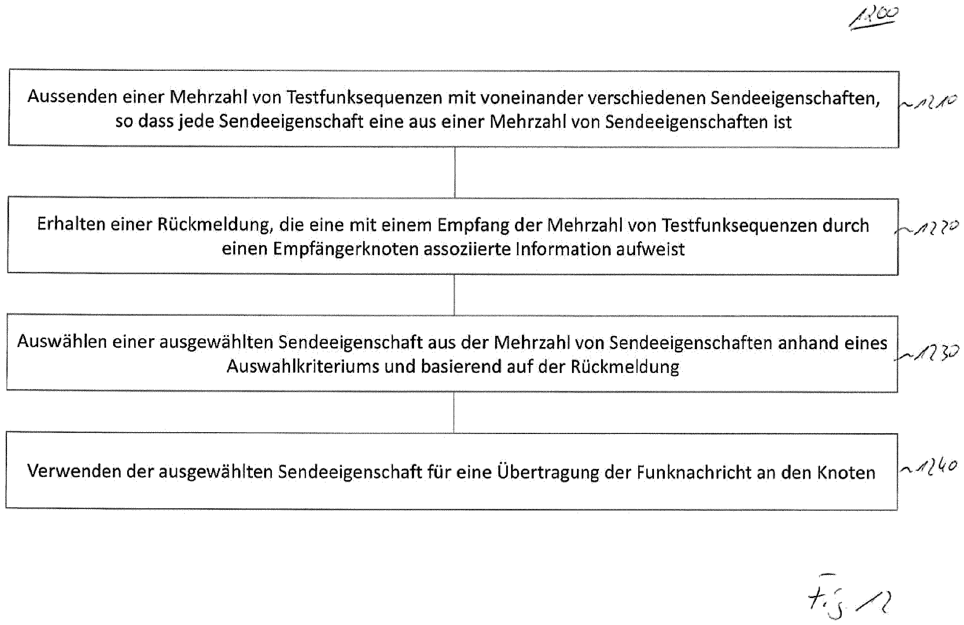

Fig. 12 zeigt ein schematisches Ablaufdiagramm eines Verfahrens 1200 gemäß einem Ausführungsbeispiel, wie es beispielsweise zum Betreiben des Funk-Transceivers 10 verwendet werden kann. Ein Schritt 1210 umfasst ein Aussenden einer Mehrzahl von Testfunksequenzen mit voneinander verschiedenen Sendeeigenschaften, so dass jede Sendeeigenschaft eine aus einer Mehrzahl von Sendeeigenschaften ist. Ein Schritt 1220 umfasst ein Erhalten einer Rückmeldung, die eine mit einem Empfang der Mehrzahl von Testfunksequenzen durch einen Empfängerknoten assoziierte Information aufweist. Ein Schritt 1230 umfasst ein Auswählen einer ausgewählten Sendeeigenschaft aus der Mehrzahl von Sendeeigenschaften anhand eines Auswahlkriteriums und basierend auf der Rückmeldung. Ein Schritt 1240 umfasst ein Verwenden der ausgewählten Sendeeigenschaft für eine Übertragung der Funknachricht an den Empfängerknoten.

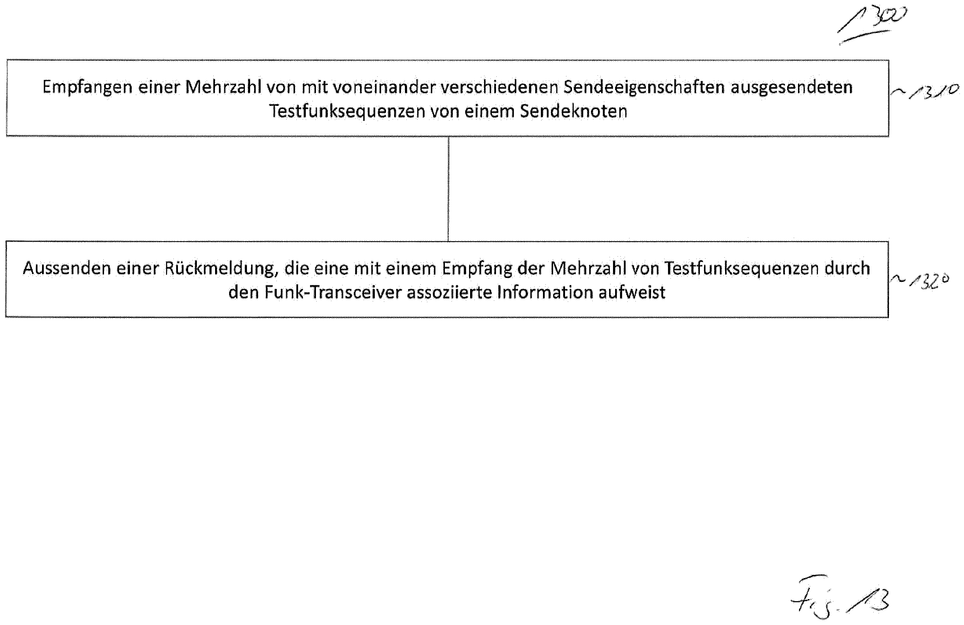

Fig. 13 zeigt ein schematisches Flussdiagramm eines Verfahrens 1300 gemäß einem Ausführungsbeispiel. Ein Schritt 1310 umfasst ein Empfangen einer Mehrzahl von mit voneinander verschiedenen Sendeeigenschaften ausgesendeten Testfunksequenzen von einem Sendeknoten. Ein Schritt 1320 umfasst ein Aussenden einer Rückmeldung, die eine mit einem Empfang der Mehrzahl von Testfunksequenzen durch den Funk-Transceiver assoziierte Information aufweist. Das Verfahren 1300 kann beispielsweise angewendet werden, um einen Funk-Transceiver 20 zu betreiben.

Die vorliegende Erfindung bezieht sich unter anderem auf eine neuartige Methode zur Optimierung der Coderate, der Datenrate und der Sendeleistung bei drahtlosen Punkt-zu-Punkt-Verbindungen. Dazu strahlt ein Funksender z. B. jede Sekunde ein kurzes Telegramm als Broadcast-QOS-Message, etwa das Funktelegramm 60, aus. Denkbar ist dies auch als Telegramm vor einem größeren Datenpaket oder eben zyklisch, beispielweise etwa alle 3, 5, 10 oder 20 Sekunden. Im Ablauf kann eine bestimmte QOS-Message zum Monitoring der Eigenschaften des Funkkanals ausgesendet werden. Einer oder mehrere oder viele Funkempfänger empfangen diese Nachricht und werten diese aus. Welche Datenraten, welche Coderäume, welche Sendeleistungen geeignet oder gut sind, können hieraus abgeleitet werden. Rückmeldungen werden ausgegeben, um dem Sendeknoten zu signalisieren, welche Sendearten fehlschlagen bzw. erfolgreich übertragen werden.

Die vorliegende Erfindung löst die Ziele der Bestimmung der optimalen Übertragungsparameter, Sendeeigenschaften wie die Datenrate, Codealphabet und ggf. Sendeleistung oder weitere, zur Ermittlung der Belegungssituation und Störsituation des Funkkanals. Während der Messzeit wird beispielsweise hinsichtlich der Häufigkeit und Länge der Störungen unterschieden. Ziel kann es in jedem Fall sein, den maximal möglichen Datendurchsatz für die Funkverbindungen zu erzielen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Funk-Transceiver (10) zum Aussenden einer Funknachricht (12);

   wobei der Funk-Transceiver (10) ausgebildet ist, um eine Mehrzahl von Testfunksequenzen (16) auszusenden,
   wobei der Funk-Transceiver (10) ausgebildet ist, um unterschiedliche Testfunksequenzen (16) mit voneinander verschiedenen Sendeeigenschaften (14) auszusenden und jede Sendeeigenschaft (14) eine aus einer Mehrzahl von Sendeeigenschaften (14) ist;
   wobei der Funk-Transceiver (10) ausgebildet ist, um eine Rückmeldung (22) zu erhalten, die eine mit einem Empfang der Mehrzahl von Testfunksequenzen (16) durch einen Empfängerknoten (20) assoziierte Information aufweist;
   wobei der Funk-Transceiver (10) ausgebildet ist, um anhand eines Auswahlkriteriums basierend auf der Rückmeldung (22) eine ausgewählte Sendeeigenschaft (14) aus der Mehrzahl von Sendeeigenschaften (14) auszuwählen; und
   wobei der Funk-Transceiver (10) ausgebildet ist, um für eine Übertragung der Funknachricht (12) an den Empfängerknoten (20) die ausgewählte Sendeeigenschaft (14) zu verwenden.

2. Funk-Transceiver (10) gemäß Anspruch 1, der ausgebildet ist, um eine Auswahlinformation (80) an den Empfängerknoten (20) zu senden, die die Mehrzahl von Testfunksequenzen (16) als eine Auswahl aus einer Anzahl von vordefinierten Testfunksequenzen (16) angibt.

3. Funk-Transceiver (10) gemäß Anspruch 2, der ausgebildet ist, um die Auswahlinformation (80) eine Kennung umfasst, die mit der Testfunksequenz (16) und der der Sendeeigenschaft (14) eindeutig assoziiert ist.

4. Funk-Transceiver (10) gemäß einem der vorangehenden Ansprüche, bei der die Sendeeigenschaft (14) zumindest eines aus

   - einer zum Senden der Testfunksequenz (16) verwendeten Datenrate;
   - einer zum Senden der Testfunksequenz (16) verwendeten Sendeleistung;
   - eines zum Codieren der Testfunksequenz (16) verwendeten Codes;
   - einer Modulationsart zum Modulieren der Testfunksequenz (16); und
   - einer Frequenz zum Senden der Testfunkfrequenz

   umfasst.

5. Funk-Transceiver (10) gemäß einem der vorangehenden Ansprüche, der ausgebildet ist, um die Mehrzahl von Testfunksequenzen (16) mit unterschiedlichen Datenraten, unterschiedlichen Sendeleistungen und unterschiedlichen Codes auszusenden.

6. Funk-Transceiver (10) gemäß einem der vorangehenden Ansprüche, der ausgebildet ist, um basierend auf der Rückmeldung (22) abzuleiten, welche der Testfunksequenzen (16) von dem Empfängerknoten (20) erfolgreich empfangen wurden; und aus den Sendeeigenschaften (14) der erfolgreich empfangenen Testfunksequenzen (16) diejenige Sendeeigenschaft (14) für die Funknachricht (12) auszuwählen, die zumindest näherungsweise eine höchste Datenrate, eine geringste Coderate und/oder eine geringste Sendeleistung aufweist.

7. Funk-Transceiver (10) gemäß einem der vorangehenden Ansprüche, der ausgebildet ist, um basierend auf der Mehrzahl von Testfunksequenzen (16) Rückmeldungen (22) von unterschiedlichen Empfängerknoten (20) zu erhalten, und um die Sendeeigenschaft (14) für eine Übermittlung einer Funknachricht (12) an den jeweiligen Empfängerknoten (20) aus der jeweiligen Rückmeldung (22) auszuwählen.

8. Funk-Transceiver (10) gemäß einem der vorangehenden Ansprüche, der ausgebildet ist, um aus der Rückmeldung (22) abzuleiten, dass der Empfängerknoten (20) für den Funk-Transceiver (10) erreichbar ist, um eine Konnektivitätsinformation zu erhalten, und um die Konnektivitätsinformation einer anderen Vorrichtung bereitzustellen.

9. Funk-Transceiver (10) gemäß einem der vorangehenden Ansprüche, der ausgebildet ist, um eine Mehrzahl von mit voneinander verschiedenen Sendeeigenschaften (14) ausgesendeten Testfunksequenzen (16) von einem Sendeknoten (20) zu empfangen, und um eine Rückmeldung (22) auszusenden, die eine mit einem Empfang der Mehrzahl von empfangenen Testfunksequenzen (16) durch den Funk-Transceiver (10) assoziierte Information aufweist.

10. Funk-Transceiver (20), der ausgebildet ist, um eine Mehrzahl von mit voneinander verschiedenen Sendeeigenschaften (14) ausgesendeten Testfunksequenzen (16) von einem Sendeknoten zu empfangen, und um eine Rückmeldung (22) auszusenden, die eine mit einem Empfang der Mehrzahl von Testfunksequenzen (16) durch den Funk-Transceiver (20) assoziierte Information aufweist.

11. Funk-Transceiver (20) gemäß Anspruch 10, der ausgebildet ist, um basierend auf der Auswahlinformation (80) eine binäre Information mit der Rückmeldung (22) zurückzugeben, die einen erfolgreichen oder nicht erfolgreichen Empfang zumindest einer Testfunksequenz (16) angibt.

12. Funk-Transceiver (20) gemäß Anspruch 10 oder 11, der ausgebildet ist, um die Rückmeldung (22) für zumindest eine Testfunksequenz (16) basierend auf einer XOR-Verknüpfung eines Binärwerts für einen erwarteten Empfang der zumindest einen Testfunksequenz (16) der Mehrzahl von Testfunksequenzen (16) und eines Binärwerts für einen erfolgreichen Empfang der zumindest einen Testfunksequenz (16) erhalten.

13. Funk-Transceiver (20) gemäß einem der Ansprüche 10 bis 12, der ausgebildet ist, um

eine Mehrzahl von Testfunksequenzen (16) auszusenden, wobei der Funk-Transceiver (20) ausgebildet ist, um unterschiedliche Testfunksequenzen (16) mit voneinander verschiedenen Sendeeigenschaften (14) auszusenden und jede Sendeeigenschaft (14) eine aus einer Mehrzahl von Sendeeigenschaften (14) ist;
wobei der Funk-Transceiver (20) ausgebildet ist, um eine Rückmeldung (22) zu erhalten, die eine mit einem Empfang der Mehrzahl von gesendeten Testfunksequenzen (16) durch einen Empfängerknoten (10) assoziierte Information aufweist;
wobei der Funk-Transceiver (20) ausgebildet ist, um anhand eines Auswahlkriteriums basierend auf der Rückmeldung (22) eine ausgewählte Sendeeigenschaft (14) aus der Mehrzahl von Sendeeigenschaften (14) auszuwählen; und
um für eine Übertragung der Funknachricht (12) an den Knoten die ausgewählte Sendeeigenschaft (14) zu verwenden.

14. Funknetzwerk mit:

zumindest einem ersten Funk-Transceiver (10), der gemäß einem der Ansprüche 1 bis 9 gebildet ist; und
einer Mehrzahl von zweiten Funk-Transceivern (20), die gemäß der Ansprüche 10 bis 13 gebildet sind.

15. Funknetzwerk gemäß Anspruch 14, bei dem die Mehrzahl von zweiten Funk-Transceivern (20) ausgebildet ist, um die Mehrzahl von Rückmeldungen ($22_1$-$22_5$) unter Anwendung einer Kollisionsvermeidungsstrategie auszusenden, um eine Kollision am ersten Knoten zu vermeiden; etwa indem jedem der Mehrzahl von zweiten Funk-Transceivern eine Kennung zugewiesen ist, und die zweiten Funk-Transceiver ausgebildet ist, um die Rückmeldung (22) mit einer Zeitverzögerung ($\Delta t$) auszusenden, die mit der Kennung assoziiert ist, um die Kollisionsvermeidungsstrategie umzusetzen, so dass unterschiedliche Kennungen zu unterschiedlichen Zeitverzögerungen ($\Delta t_1$ - $\Delta t_5$) führen.

Fig. 1

Fig. 2

**Transmitter inkl. Modulator**

Sendefolge Nr. X

Code-Vorrat $C_n$

Korrelationsfolge $s_1$
Korrelationsfolge $s_2$
Korrelationsfolge $s_3$
Korrelationsfolge $s_{n-1}$
Korrelationsfolge $s_n$

**Funkempfänger inkl. Korrelator**

Referenzsequenzen

rekonstruierte Nummer Nr. R der empfangenen Korrelationsfolge aus 1..n

Code-Vorrat $C_n$

Korrelationsfolge $s_1$
Korrelationsfolge $s_2$
Korrelationsfolge $s_3$
Korrelationsfolge $s_{n-1}$
Korrelationsfolge $s_n$

Fig. 3

Fig. 4

400

101

32

102

203

204

205

201

36

34

EP 4 539 366 A1

Fig. 5

60

PRÄAMBEL | METHODEN-NR. | SEQ-Nr. 1 ($C_2$), DR $d_1$, $P_{TX1}$ | SEQ-Nr. 2 $C_2$, DR $d_2$, $P_{TX2}$ | SEQ-Nr.3 $C_2$, DR $d_3$, $P_{TX3}$ | ... | SEQ-Nr. p $C_2$, DR $d_8$, $P_{TX8}$

$42_1$    $42_2$    $42_3$    $16_1$    $42_3$    $16_2$    $42_4$    $16_3$    $42_i$    $16_p$

→ Typ, Datenraten, Coderäume, Sendeleistungen

Fig. 6

$U_{i,RX}$

| | $C_2$ | $C_4$ | $C_8$ | $C_{16}$ | $C_{32}$ | $C_{64}$ | $C_{128}$ | $C_{256}$ |
|---|---|---|---|---|---|---|---|---|
| d1 | 1 | 0 | 0 | 1 | 0 | 1 | 0 | 0 |
| d2 | 1 | 0 | 0 | 1 | 0 | 0 | 0 | 0 |
| d3 | 0 | 0 | 0 | 0 | 0 | 0 | 0 | 0 |

Fig. 7

$U_{i,RX}$

| | $C_2$ | $C_4$ | $C_8$ | $C_{16}$ | $C_{32}$ | $C_{64}$ | $C_{128}$ | $C_{256}$ |
|---|---|---|---|---|---|---|---|---|
| d1 | 1 | 1 | 0 | 1 | 0 | 1 | 1 | 0 |
| d2 | 1 | 1 | 0 | 1 | 0 | 0 | 0 | 0 |
| d3 | 1 | 0 | 0 | 1 | 0 | 0 | 1 | 0 |

Fig. 8

$U_{i,xor}$

| | $C_2$ | $C_4$ | $C_8$ | $C_{16}$ | $C_{32}$ | $C_{64}$ | $C_{128}$ | $C_{256}$ |
|----|----|----|----|----|----|----|----|----|
| d1 | 0 | 1 | 0 | 0 | 0 | 0 | 1 | 0 |
| d2 | 0 | 1 | 0 | 0 | 0 | 0 | 0 | 0 |
| d3 | 1 | 0 | 0 | 1 | 0 | 0 | 1 | 0 |

22

Fig 9

Fig. 12

Fig. 11

*1200*

Aussenden einer Mehrzahl von Testfunksequenzen mit voneinander verschiedenen Sendeeigenschaften, so dass jede Sendeeigenschaft eine aus einer Mehrzahl von Sendeeigenschaften ist ~ *1210*

Erhalten einer Rückmeldung, die eine mit einem Empfang der Mehrzahl von Testfunksequenzen durch einen Empfängerknoten assoziierte Information aufweist ~ *1220*

Auswählen einer ausgewählten Sendeeigenschaft aus der Mehrzahl von Sendeeigenschaften anhand eines Auswahlkriteriums und basierend auf der Rückmeldung ~ *1230*

Verwenden der ausgewählten Sendeeigenschaft für eine Übertragung der Funknachricht an den Knoten ~ *1240*

Fig. 12

EP 4 539 366 A1

1300

Empfangen einer Mehrzahl von mit voneinander verschiedenen Sendeeigenschaften ausgesendeten Testfunksequenzen von einem Sendeknoten

~1310

Aussenden einer Rückmeldung, die eine mit einem Empfang der Mehrzahl von Testfunksequenzen durch den Funk-Transceiver assoziierte Information aufweist

~1320

Fig. 13

**Europäisches Patentamt**
**European Patent Office**
**Office européen des brevets**

## EUROPÄISCHER RECHERCHENBERICHT

**Nummer der Anmeldung**

**EP 23 20 3533**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 528 408 A1 (WIPRO LTD [IN]) 21. August 2019 (2019-08-21) * Absätze [0005], [0019], [0020], [0021], [0030]; Abbildungen 2, 4, 5 * ----- | 1-15 | INV. H04L1/00 H04L1/1829 |
| A | US 2013/003560 A1 (LUNDEVALL MAGNUS [SE] ET AL) 3. Januar 2013 (2013-01-03) * Absätze [0019], [0044] * * Abbildung 2 * ----- | 1-15 | |
| A | US 2020/403736 A1 (LIN CHIH-KUANG [IE] ET AL) 24. Dezember 2020 (2020-12-24) * Absätze [0023], [0026] * ----- | 1-15 | |
| A | GB 2 502 619 A (RENESAS MOBILE CORP [JP]) 4. Dezember 2013 (2013-12-04) * Seite 15 * ----- | 1-15 | |

**RECHERCHIERTE SACHGEBIETE (IPC)**

H04L

Der vorliegende Recherchenbericht wurde für alle Patentansprüche erstellt

| Recherchenort | Abschlußdatum der Recherche | Prüfer |
|---|---|---|
| München | 13. März 2024 | Stolte, Norbert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes Dokument

EPO FORM 1503 03.82 (P04C03)

**EP 4 539 366 A1**

## ANHANG ZUM EUROPÄISCHEN RECHERCHENBERICHT
## ÜBER DIE EUROPÄISCHE PATENTANMELDUNG NR.

EP 23 20 3533

13-03-2024

| Im Recherchenbericht angeführtes Patentdokument | Datum der Veröffentlichung | Mitglied(er) der Patentfamilie | | Datum der Veröffentlichung |
|---|---|---|---|---|
| EP 3528408 A1 | 21-08-2019 | KEINE | | |
| US 2013003560 A1 | 03-01-2013 | EP | 2545687 A1 | 16-01-2013 |
| | | US | 2013003560 A1 | 03-01-2013 |
| | | WO | 2011112127 A1 | 15-09-2011 |
| US 2020403736 A1 | 24-12-2020 | US | 2020403736 A1 | 24-12-2020 |
| | | US | 2020404473 A1 | 24-12-2020 |
| GB 2502619 A | 04-12-2013 | GB | 2502619 A | 04-12-2013 |
| | | WO | 2013179269 A1 | 05-12-2013 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KAMMEYER, K.D.** Nachrichtenübertragung. *Vieweg & Teubner*, 2008, vol. 4
- **LÜKE, H. D**. Korrelationssignale. Springer, 1992
- **GOLD, R.** Optimal binary sequences for spread spectrum multiplexing (Corresp.). *Information Theory. In: IEEE Transactions on*, 1967, vol. 13 (4), 619-621
- integrierter UHF-Funkempfänger mit niedrigem Stromverbrauch und geringer Antwortzeit für die störsichere Datenübertragung. **MILOSIU, H.** Dissertation. N&H Verlag GbR, 2013